# EUROPÄISCHE PATENTSCHRIFT

(11) **EP 2 918 378 B1**
(45) Veröffentlichungstag und Bekanntmachung des Hinweises auf die Patenterteilung: **05.07.2017**
(21) Anmeldenummer: 15157212.0
(22) Anmeldetag: 02.03.2015
(51) Int. Cl.: B25J 9/16, G05B 19/4061, G01N 35/00, G01N 35/10

(54) **Verfahren zur Wegfindung in einem automatisierten Handhabungssystem sowie Handhabungssystem mit entsprechendem Kontrollmodul zur Wegfindung**
Process for finding a path in an automated handling system, and handling system with corresponding control module for finding a path
Procédé de recherche de chemin dans un système de manipulation automatisé et système de manipulation doté d'un module de commande correspondant destiné à la recherche de chemin

(30) Priorität: 10.03.2014 CH 3502014
(43) Veröffentlichungstag der Anmeldung: 16.09.2015
(73) Patentinhaber: Tecan Trading AG, 8708 Männedorf (CH)
(72) Erfinder: Brandenberger, Joel, 8708 Männedorf (CH)
(74) Vertreter: OK pat AG

(56) Entgegenhaltungen:
- EP-A2- 0 543 236
- EP-A2- 1 612 004
- DE-A1-102012 103 830
- US-A1- 2009 276 071
- LI T-Y ET AL: "ON-LINE MANIPULATION PLANNING FOR TWO ROBOT ARMS IN A DYNAMIC ENVIRONMENT", INTERNATIONAL JOURNAL OF ROBOTICS RESEARCH, SAGE SCIENCE PRESS, THOUSAND OAKS, US, Bd. 16, Nr. 2, 1. April 1997 (1997-04-01), Seiten 143-167, XP000656529, ISSN: 0278-3649

## Beschreibung

Die Erfindung betrifft Verfahren zur Wegfindung in einem automatisierten Handhabungssystem sowie Handhabungssysteme mit entsprechendem Kontrollmodul zur Wegfindung. Insbesondere geht es um die Wegfindung in computergesteuerten Flüssigkeitshandhabungssystemen. Hintergrund der Erfindung

Es gibt zahlreiche medizinische, biologische, chemische sowie pharmazeutische Geräte, bei denen es um die Handhabung und den Einsatz von Flüssigkeiten geht. So gibt es zum Beispiel automatisierte Flüssigkeitshandhabungssysteme, um medizinische, biologische, physikalische und chemische Untersuchungen durchzuführen oder um Prozesse in diesen Gebieten auszuführen.

Heutzutage sind die meisten der automatisierten Flüssigkeitshandhabungssysteme sogenannte computergesteuerte Handhabungssysteme.

Ein typisches computergesteuertes Handhabungssystem umfasst einen Arbeitsbereich (Arbeitstisch) für das Abstellen von Flüssigkeitsbehältern, einen motorisierten Pipettierroboter und eine Steuerung (meist eine prozessorbasierte Steuerung). Der Pipettierroboter umfasst mindestens eine Pipette zum Aspirieren und Dispensieren von flüssigen Proben. Durch den Einsatz eines Ablaufprogramms, das in der Steuerung ausgeführt wird, kann der Pipettierroboter an eine bestimmte Position bewegt werden, um dort eine spezifische Handlung auszuführen. So kann zum Beispiel eine Pipette in einen Behälter abgesenkt werden, um dort eine Flüssigkeit aufzusaugen oder eine Flüssigkeit abzugeben.

Moderne Handhabungssysteme umfassen mehr als nur einen Roboter. In solchen Systemen kann es sehr aufwendig sein, die einzelnen Bewegungsabläufe so zu definieren, dass es nicht zu Kollisionen oder gegenseitigen Beeinträchtigungen kommt.

Ein einfacher Ansatz wäre die Anwendung eines Lernverfahrens (teach-in genannt), bei dem manuell die einzelnen Roboterarme bewegt und die gewünschten Handlungen so festgelegt werden. Ein solches Lernverfahren erreicht jedoch schnell seine Grenzen wenn es z.B. um die Optimierung eines Gesamtverfahrens geht.

Um Kollisionen in Robotersystemen zu verhindern, können mathematische Verfahren zur Kollisionsprüfung eingesetzt werden. Hierzu existieren zahlreiche Publikationen (siehe z.B. LI T-Y ET AL: "ON-LINE MANIPULATION PLANNING FOR TWO ROBOT ARMS IN A DYNAMIC ENVIRONMENT", INTERNATIONAL JOURNAL OF ROBOTICS RESEARCH, Bd. 16, Nr. 2, 1. April 1997 (1997-04-01), Seiten 143-167).

Aus den theoretischen Betrachtungen kann letztendlich geschlussfolgert werden, dass es sehr schwierig und aufwendig ist verschiedene Kollisionsverfahren miteinander zu vergleichen. Das liegt vor allem daran, dass die verschiedenen Kollisionsverfahren sehr empfindlich sind gegenüber spezifischen Szenarien und Konstellationen.

Es stellt sich nun die Aufgabe die Steuerung eines mehrachsigen Handhabungssystems möglichst flexibel und zielführend auszubilden, wobei eine Kollisionsvermeidung für einzelne sich bewegende Arme eines solchen Handhabungssystems möglichst schnell ablaufen soll.

Gemäss Erfindung wird ein Verfahren zur Kollisionsvermeidung in einem automatisierten Handhabungssystem bereitgestellt, dessen Merkmale dem Anspruch 1 zu entnehmen sind.

Gemäss Erfindung wird ein automatisiertes Handhabungssystem mit Kollisionsvermeidung bereitgestellt, dessen Merkmale dem Anspruch 15 zu entnehmen sind.

Vorteilhafte Ausführungsformen sind den jeweiligen Unteransprüchen zu entnehmen.

Die Kollisionsvermeidung kann bei allen Ausführungsformen ein Verfahren oder Modul zur Wegfindung und ein Verfahren oder Modul zur Kollisionsprüfung umfassen.

Bei der Erfindung geht es insbesondere um die Kollisionsvermeidung in einem labor- oder medizintechnischen Handhabungssystem. Insbesondere geht es um Flüssigkeitshandhabungssysteme, wie z.B. Pipettierroboter.

Ziel der Erfindung ist es, für jede Bewegungsanforderung in einem solchen System eine geeignete Lösung in Form eines geeigneten Weges zu finden und dabei Kollisionen oder andere Beeinträchtigungen auszuschliessen.

Bei der vorliegenden Erfindung geht es um die Kollisionsvermeidung in einem dynamischen Umfeld, da mindestens zwei sich bewegende Arme berücksichtigt werden müssen. Das System der Erfindung geht dabei von einer sogenannten bekannten quasi-statischen Umgebung aus. Die Umgebung wird gebildet aus dem Arbeitstisch mit allen sich darauf befindlichen Objekten und allenfalls Anbauten an den Arbeitstisch für Peripheriegeräte wie Inkubatoren, Mikroplattenreader oder Mikroplattenlogistikgeräte. Da alle Objekte im Bewegungsbereich der Arme in Form von modellierten Umhüllenden vorliegen, kann die Ist-Topographie jeweils ermittelt werden. Die Umgebung wird als quasi-statische Umgebung bezeichnet, da sie sich nicht oder nur unwesentlich innerhalb eines Zeitfensters (z.B. während der Bewegung eines Armes von A nach B) ändert.

Da es sich meist um Bewegungen handelt, die nicht mehrfach sondern einmalig und direkt ausgeführt werden, wird eine Lösung in Form einer Echtzeit-Implementierung zur Kollisionsvermeidung in dem Handhabungssystem bereitgestellt.

Gemäss Erfindung wird vorzugsweise bei allen Ausführungsformen im Rahmen der Kollisionsvermeidung eine Punkt-zu-Punkt Wegfindung durchgeführt. Diese Punkt-zu-Punkt Wegfindung erfolgt unter Berücksichtigung mindestens zweier Arme, die sich im System miteinander und/oder relativ zueinander bewegen können, d.h. es werden neben den quasi-statischen auch dynamische Zusammenhänge berücksichtigt.

Vorzugsweise kommt bei allen Ausführungsformen eine Koordination zwischen den Armen zur Anwendung, es gibt aber keine Zusammenarbeit der Arme. Ein Beispiel hierfür wäre, dass ein Arm eine Mikrotiterplatte hält, während ein anderer Arm in diese Mikrotiterplatte pipettiert. Da dies nicht Kern der Erfindung ist, haben die Arme bei den meisten Ausführungsformen untereinander nur eine sogenannte leichte Kopplung, die durch eine Steuerung bzw. ein Kontrollmodul des Systems erzielt wird.

Diese leichte Kopplung wird vorzugsweise bei allen Ausführungsformen dazu eingesetzt, um einem Arm "mitzuteilen", dass sich auch ein anderer Arm bewegt oder sich in Bewegung setzen wird. Bei der Wegfindung für den einen Arm muss daher die Bewegung des anderen Armes berücksichtigt werden und es muss in diesen Fällen neben einer quasi-statischen auch eine dynamische Kollisionsprüfung durchgeführt werden.

Gemäss Erfindung kommt vorzugsweise bei allen Ausführungsformen ein heuristischer Ansatz zur Anwendung, da dieser Ansatz am schnellsten Ergebnisse liefert und dabei relativ optimale Wege erzeugt.

Bei bestimmten Szenarien konnte der heuristische Ansatz der Erfindung keine Lösung finden, obwohl es theoretisch einen möglichen Weg gibt. Für diese Sonderfälle können bei allen Ausführungsformen gemäss Erfindung optional zusätzliche Regeln zur Anwendung gebracht werden.

Je nach Bedarf können gemäss Erfindung z.B. Ausweichstrategien vorgegeben werden, die den einzelnen Anwendungen Rechnung tragen. Bei denjenigen Ausführungsformen, bei denen solche Ausweichstrategien zum Einsatz kommen, werden die Ausweichstrategien berechnet, um der Vorrichtung/dem System zur Anwendung zur Verfügung zu stehen.

Die Erfindung ermöglicht es, Ausweichstrategien zur Anwendung zu bringen, die z.B. sicherstellen, dass wichtige Schritte (Schritte mit hoher Priorität) den Vorrang vor weniger wichtigen Schritten haben. Solche Ausweichstrategien können bei allen Ausführungsformen der Erfindung fest vorgegeben sein. Es sind aber auch Ausführungsformen möglich, bei denen Ausweichstrategien vorgebbar oder auswählbar sind. Dies kann z.B. durch den Einsatz eines logischen Prioritätsschalters erreicht werden.

Die Erfindung ermöglicht es, Ausweichstrategien zur Anwendung zu bringen, die z.B. sicher stellen, dass heikle Schritte (Schritte mit hoher Priorität) mit besonderer Vorsicht ausgeführt werden, um zum Beispiel zu verhindern, dass ein Tropfen aus einer Pipette tropft und in eine kritische Probe auf dem Arbeitsbereich gelangt. Zu diesem Zweck können bei kritischen Schritten z.B. entsprechend vorsichtige Beschleunigungen und/oder Ausweichwege entlang unkritischer Bereiche vorgegeben werden.

Das Vorgeben vorsichtiger Beschleunigungen und/oder Ausweichwege kann bei allen Ausführungsformen mittels einer Firmware in der Motorsteuerung eines Armes oder z.B. durch Regeln in einem Steuerungsmodul erfolgen.

Bei der vorliegenden Erfindung wurde die Qualität verschiedener Bewegungsplanungsalgorithmen durch die Länge der jeweils berechneten Wege und durch die Rechenzeit der Algorithmen bewertet, um so den bestmöglichen Algorithmus zu finden. Ein Teil der Algorithmen, die untersucht wurden, erzeugte erheblich längere Pfade, als der optimale Pfad für das entsprechende Szenario und manche Algorithmen verbrauchten mehr (Rechen-)Zeit für die Kollisionsprüfung als andere.

Ein Augenmerk wurde darauf gelegt, dass der gewählte Algorithmus auch bei komplexen Szenarien, in denen andere Algorithmen keine Lösung gefunden haben, noch Ergebnisse erzeugt, die brauchbar sind.

Durch die Vorgaben, die ein Handhabungssystem der Erfindung mit erfüllen soll, muss der Algorithmus, der genutzt werden soll, schnell zu einem Ergebnis kommen und dem optimalen Pfad möglichst nah sein.

Gemäss Erfindung kommt ein Bewegungsplanungsalgorithmus zum Einsatz, der als eine Art Prozedur zu verstehen ist. Diese Prozedur stützt sich auf eine oder mehrere Regeln ab, die gemäss Erfindung dem System vorgegeben sind/werden.

Vorzugsweise kommt bei allen Ausführungsformen ein Bewegungsplanungsalgorithmus zum Einsatz, der einen Regelsatz mit mehreren Regeln umfasst, wobei es sich um heuristische Regeln handelt. Der Regelsatz der Erfindung stellt eine Ablaufverknüpfung zwischen einzelnen Regeln her.

Vorzugsweise kommt bei allen Ausführungsformen ein Bewegungsplanungsalgorithmus zum Einsatz, um nacheinander mehrere mögliche Wege zu ermitteln, die hintereinander in einer Liste oder Tabelle abgelegt/gespeichert werden. In einem nachfolgenden Teilverfahren wird dann ein Weg nach dem anderen aus der Tabelle oder Liste bereitgestellt und einer Kollisionsprüfung unterzogen. Sobald ein kollisionsfreier Weg gefunden wurde, wird dieser Vorgang abgebrochen. Dieser Ansatz ist besonders effizient und liefert wiederholbar dieselben Ergebnisse.

Die vorliegende Erfindung lässt sich nicht nur in proprietären Handhabungssystemen, sondern auch in offenen Handhabungssystemen verschiedenster Anbieter anwenden.

Die erfindungsgemäßen Handhabungssysteme haben den Vorteil, dass der Platz oberhalb des Arbeitsbereiches optimal genutzt werden kann und dass sehr enge und genaue Bewegungen ausführbar sind.

Ein besonderer Vorteil der Erfindung liegt in einer Auftrennung in eine quasi-statische Kollisionsprüfung und eine dynamische Kollisionsprüfung, da diese Auftrennung schnell und zuverlässig Ergebnisse liefert.

Die erfindungsgemäßen Handhabungssysteme und die erfindungsgemäßen Verfahren werden nun an Hand von schematischen, den Umfang der Erfindung nicht beschränkenden Zeichnungen von beispielhaften Ausführungsformen im Detail erläutert.
- Fig. 1: zeigt eine schematische Draufsicht eines ersten Handhabungssystems der Erfindung mit zwei Armen und mit mehreren Objekten;
- Fig. 2A: zeigt ein schematisches Flussdiagramm eines ersten Verfahrens der Erfindung;
- Fig. 2B: zeigt ein schematisches Flussdiagramm eines zweiten Verfahrens der Erfindung;
- Fig. 2C: zeigt ein schematisches Flussdiagramm eines ersten Teilverfahrens eines dritten Verfahrens der Erfindung;
- Fig. 2D: zeigt ein schematisches Flussdiagramm eines zweiten Teilverfahrens des dritten Verfahrens der Erfindung;
- Fig. 3A: zeigt eine schematische Seitenansicht eines weiteren Handhabungssystems der Erfindung, wobei nur ein Arm und ein Behälter gezeigt sind;
- Fig. 3B: zeigt eine schematische Seitenansicht des Handhabungssystems der Fig. 3A;
- Fig. 4A: zeigt eine schematische Draufsicht eines weiteren Handhabungssystems der Erfindung, wobei nur ein Arm gezeigt ist;
- Fig. 4B: zeigt eine schematische Seitenansicht des einen Armes der Fig. 4A in einem einsatzbereiten Zustand;
- Fig. 4C: zeigt eine schematische Seitenansicht des einen Armes der Fig. 4A in einem eingeklappten Zustand;
- Fig. 5: zeigt ein Diagramm in dem vier verschiedene Algorithmen in Sachen Planungszeit miteinander verglichen werden.

Im Folgenden werden beispielhafte Flüssigkeitshandhabungssysteme 100 beschrieben, wobei sich die Erfindung jedoch problemlos auch auf andere Handhabungssysteme 100 anwenden lässt. Die Handhabungssysteme 100 werden im Folgenden auch kurz als Systeme 100 bezeichnet.

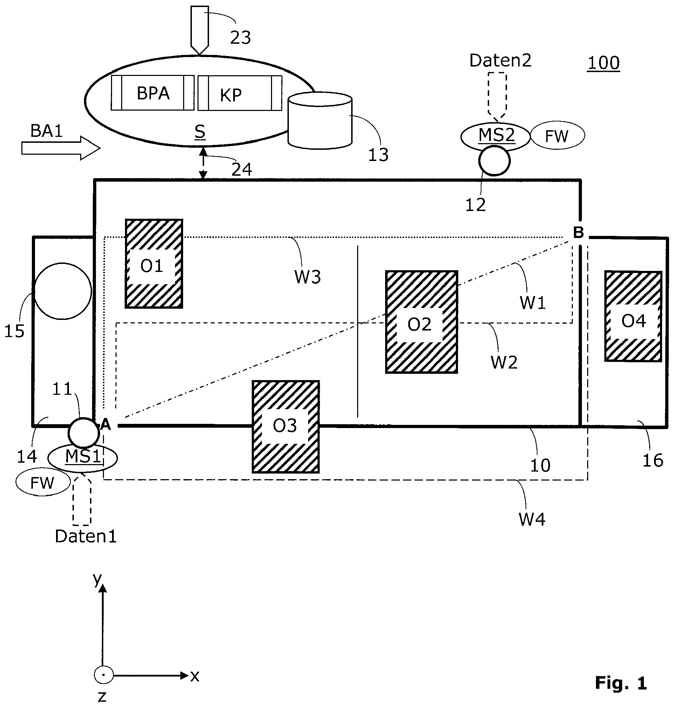

Die Fig. 1 zeigt ein System 100, das hier einen Arbeitsbereich 10 umfasst, der im Wesentlichen horizontal angeordnet ist und der zum quasi-statischen Absetzen mindestens eines (Flüssigkeits-)Behälters O1 ausgelegt ist. In Fig. 1 ist eine Situation gezeigt, in der insgesamt vier Behälter O1 - O4 oder andere Objekte auf dem Arbeitsbereich 10 angeordnet sind. Das System 100 umfasst weiterhin mindestens zwei numerisch kontrollierte (Handhabungs-) Arme 11, 12, die hier durch einfache Kreise dargestellt sind. Diese beiden Arme 11, 12 können sich über den Arbeitsbereich 10 bewegen. Zu diesem Zweck weist jeder der beiden Arme 11, 12 ein eigenes Antriebssystem auf, damit beide Arme 11, 12 räumlich und zeitlich voneinander unabhängig bewegbar sind.

In Fig. 1 und den anderen Figuren sind die Antriebssysteme durch eine Motorsteuerung MS1 und MS2 symbolisiert, die typischerweise eine Firmware FW umfasst.

Sowohl Labware wie Mikroplatten, Wells, Träger, Rahmen, Röhrchen, Container, Flaschen, Kolben und dergleichen als auch Waagen, Schüttler, Inkubatoren, Carrier für Labware, Thermocycler Geräte und dergleichen werden hier der Einfachheit halber als Objekte O1 - O4 bezeichnet.

Ein System 100 der Erfindung umfasst mindestens zwei Arme 11, 12, von denen mindestens ein Arm 11 mindestens drei Bewegungs-Freiheitsgrade besitzt.

Ein Arm 12 kann z.B. Flüssigkeiten pipettieren und ausgeben. Ein anderer Arm 11 kann z.B. Greiffinger besitzen, damit dieser Arm 11 eine Mikroplatte greifen und bewegen kann. Eine solche Mikroplatte ist ein Objekt, das als Arbeitsplatte dient und das mehrere Kavitäten zum Aufnehmen von Flüssigkeiten aufweist.

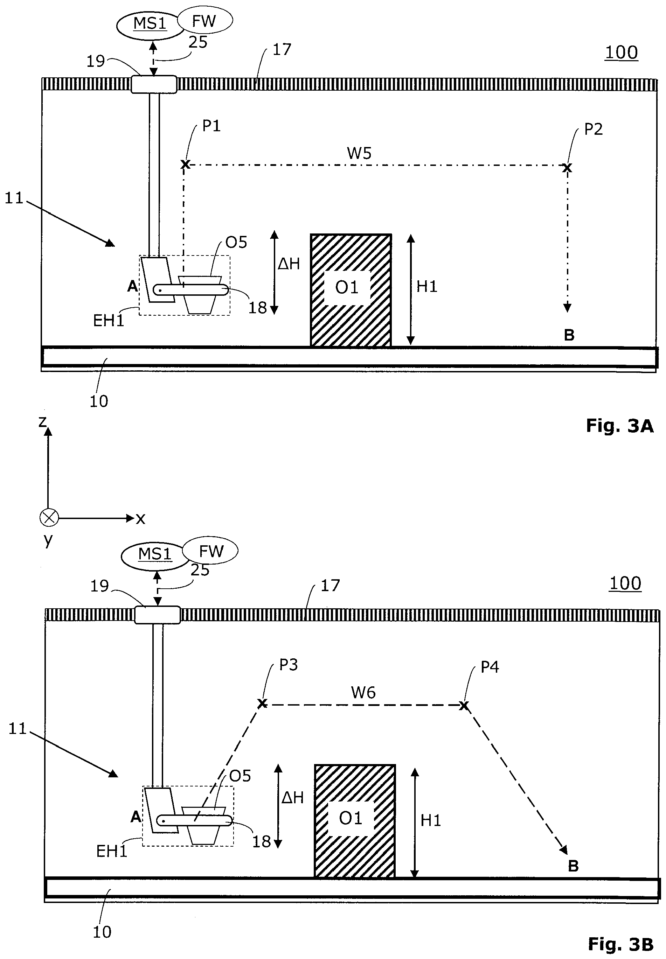

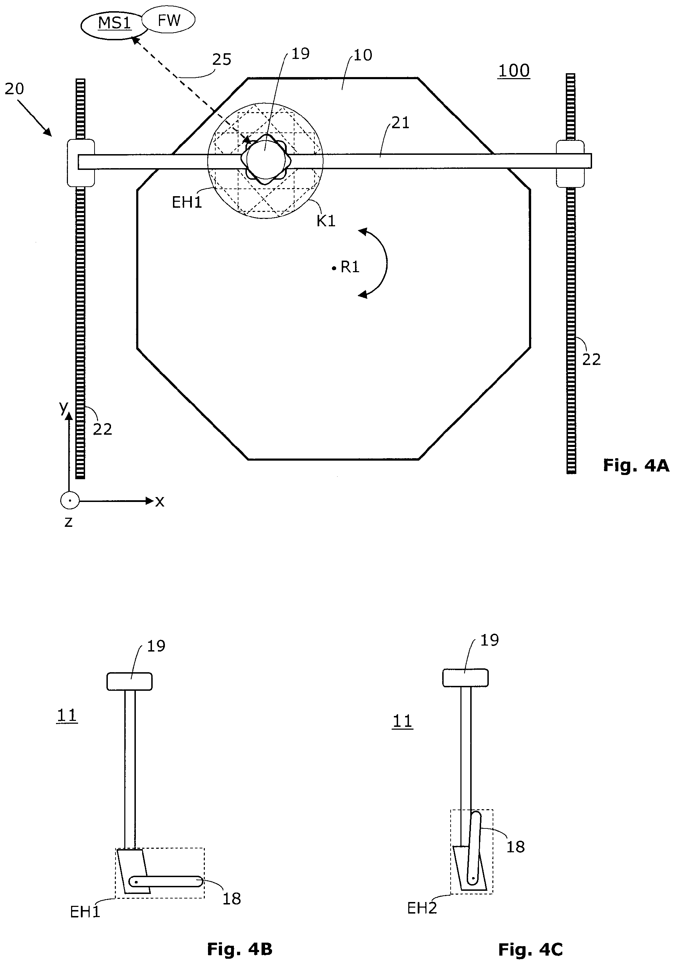

Vorzugsweise kommen bei allen Ausführungsformen Arme 11, 12 zum Einsatz, die beweglich in einer sogenannten Portal- oder Brückenanordnung oberhalb des Arbeitsbereichs 100 sitzen, wie z.B. in den Figuren 3A, 3B und 4Abis 4C gezeigt. Die Arme 11, 12 können z.B. an einer Laufschiene oder Brücke 17 oberhalb des Arbeitsbereichs 10 angebracht sein. Jeder der Arme 11, 12 kann z.B. einen Läufer 19 umfassen, der einen Antrieb aufweist, um den entsprechenden Arm 11, 12 entlang der Laufschiene oder Brücke 17 zu bewegen, oder der durch einen externen Antrieb bewegbar ist (z.B. mittels eines Riemenantriebs).

Der Antrieb eines jeden Armes 11, 12 umfasst eine Motorsteuerung MS1 bzw. MS2, die als eine Kombination aus Hard- und Software realisiert ist. Als Hardware umfasst eine solche Motorsteuerung MS1 bzw. MS2 vorzugsweise einen Controller und eine Ansteuerungselektronik, die Strom oder Spannung an den Motor des Antriebs anlegt. Das Anlegen/Einprägen eines Stromes oder einer Spannung ist in den Figuren durch einen strichlierten Doppelpfeil 25 dargestellt. Der Doppelpfeil 25 soll andeuten, dass in den meisten Fällen der Antrieb eine Rückmeldung (z.B. Positions- oder Drehzahlangaben) an die Motorsteuerung MS1, MS2 zurück liefert. Die Software ist typischerweise als Firmware FW ausgelegt. Durch die Firmware FW können Bewegungsprofile (Parameter wie Stromwerte und Schrittauflösung sowie z.B. Strecke, Geschwindigkeit, Rampe, Pausen und Schleifen) vorgegeben werden. Diese Vorgaben, die in der Firmware FW abgebildet sind, werden auch als Bewegungscharakteristika bezeichnet.

Die Firmware FW kann bei allen Ausführungsformen auch als Profilgenerator ausgelegt sein, der die genauen Bewegungsabläufe vorgibt. Vorzugsweise kooperiert dieser Profilgenerator bei allen Ausführungsformen nicht nur mit den Antrieben sondern auch mit der Wegfindung, damit bei der Wegplanung und/oder Kollisionsprüfung der genaue Weg betrachtet werden kann.

Die Motorsteuerung MS1, MS2 dient quasi als Schnittstelle zwischen der Steuerung S und dem/den Motoren eines Armes 11, 12. Die eigentliche Bewegungserzeugung erfolgt durch die Motorsteuerung MS1, MS2 und wird im Wesentlichen anhand von Vorgaben seitens der Firmware FW oder des Profilgenerators bestimmt. Dabei ist wichtig, zu beachten, dass die seitens eines Armes 11, 12 konkret ausgeführte Bewegung nur annähernd der Sollbewegung entspricht, da es z.B. aufgrund der Motorcharakteristik, der Trägheit und bedingt durch (belastungsabhängige) Toleranzen der Arme 11, 12 zu kleineren systeminhärenten Abweichungen (auch Schleppfehler genannt) kommen kann. Ausserdem setzt die Firmware FW bzw. der Profilgenerator die erhaltenen Befehle im Rahmen der Bewegungserzeugung anhand eines vorgegebenen Bewegungsprofils um. Auch dadurch ergeben sich Abweichungen von der Sollbewegung, wobei diese Abweichungen vorgegeben sind.

Gemäss Erfindung wird dieser Tatsache dadurch Rechnung getragen, dass bereits bei der Wegfindung die vorgegebenen Abweichungen Berücksichtigung finden. D.h. gemäss Erfindung wird bereits im Rahmen der Wegfindung der exakte Bewegungsverlauf der Arme 11, 12 unter Berücksichtigung des vorgegebenen Bewegungsprofils vorher ermittelt.

Um dies zur ermöglichen, werden/wird bei der Bewegungsplanung BPA und/oder bei der Kollisionsprüfung KP die Bewegungscharakteristika der Bewegungserzeugung berücksichtigt.

Vorzugsweise umfasst die Steuerung S bei allen Ausführungsformen ein Abbild der Firmware FW* der einzelnen Motorsteuerungen MS1, MS2, oder die Steuerung S hat bei allen Ausführungsformen Zugang zu dem Profilgenerator.

Der Begriff Abbild FW* wurde gewählt, um vor allen die folgenden Implementierungsmöglichkeiten zu umschreiben:
- eine echte Kopie der Firmware FW;
- eine Umsetzung der Firmware FW in eine andere Programmiersprache oder -umgebung;
- ein Kompilat der Firmware FW;
- eine Emulation der Firmware FW.

Die Steuerung S kann bei allen Ausführungsformen pro Motorsteuerung MS1, MS2 ein entsprechendes Abbild der Firmware FW* dieser Motorsteuerungen MS1, MS2 umfassen. Dieses Abbild FW* ist so in der Steuerung S implementiert oder wird der Steuerung S so zur Verfügung gestellt, dass bereits bei der Wegeplanung mittels des Algorithmus BPA und/oder bei der Kollisionsprüfung KP die Einflüsse der Firmware FW auf den konkreten Wegeverlauf Berücksichtigung finden.

Vorzugsweise hat die Steuerung S bei allen Ausführungsformen Zugang zu dem Profilgenerator, damit bereits bei der Wegeplanung mittels des Algorithmus BPA und/oder bei der Kollisionsprüfung KP der konkrete Wegeverlauf (d.h. der möglichst exakte Weg) Berücksichtigung finden kann.

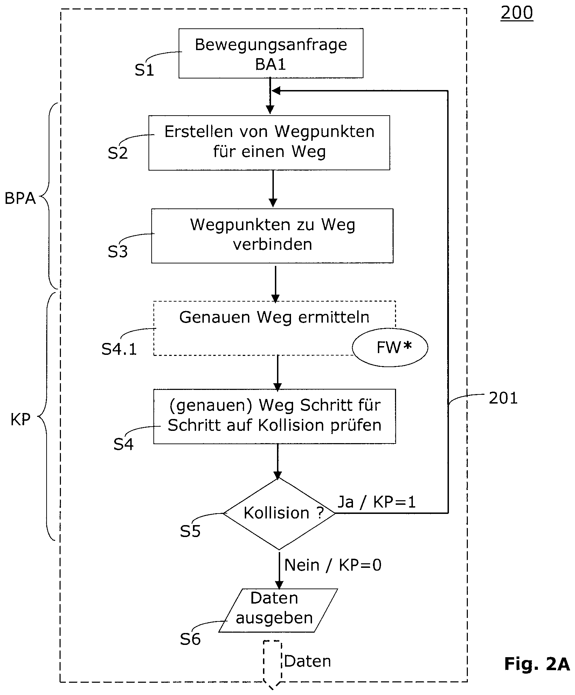

Bevorzugt sind Ausführungsformen, bei denen das Abbild FW* bei der Kollisionsprüfung KP zum Einsatz kommt. Aus den Wegpunkten, die z.B. in einem Schritt S3 des Verfahrens 200 bereitgestellt wurden, wird dann durch Einsatz des Abbildes FW* der genaue Weg ermittelt, den jeder Arm 11, 12 zurücklegen würde. Dieser Schritt ist als ein optionaler Schritt S4.1 in Fig. 2A gezeigt. Um zu zeigen, dass im Rahmen des Schrittes S4.1 das Abbild FW* zum Einsatz kommt, ist in Fig. 2A das Abbild FW* durch ein Oval angedeutet.

Besonders bevorzugt sind Ausführungsformen, bei denen Ausgangsgrössen des Profilgenerators bei der Kollisionsprüfung KP zum Einsatz kommen.

Der Begriff des genauen Weges wird verwendet, um anzudeuten, dass ein Weg, der unter Einsatz eines Abbildes der Firmware FW* oder des Profilgenerators ermittelt wurde, deutlich näher am effektiven Weg eines Armes 11, 12 liegt als der Weg, der lediglich durch Einsatz eines Algorithmus BPA gefunden wurde. Der Begriff "genauer" ist somit als eine Relativaussage zu verstehen.

Dann wird vorzugsweise im Rahmen einer Vorausschau jeder Arm 11, 12 Schritt für Schritt entlang seines genauen Weges bewegt, um rein rechnerisch Schritt für Schritt diesen genauen Weg auf Kollision zu prüfen (Schritte S4 und S5 des Verfahrens 200).

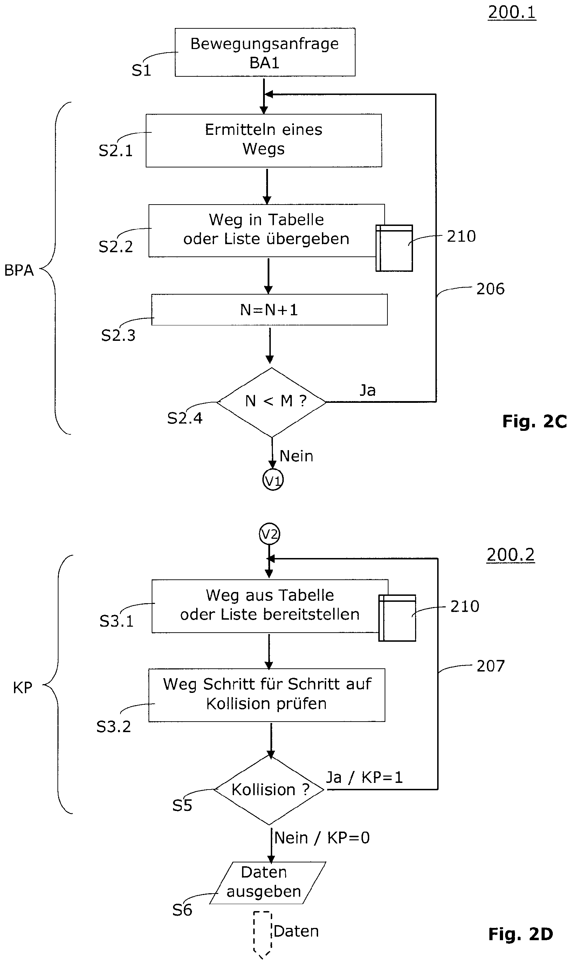

Falls der optionale Schritt S4.1 im Rahmen des Verfahrens 200 zur Anwendung kommt, so wird bei der Kollisionsprüfung im Schritt S4 nicht der einfache Weg angewendet, der durch den Algorithmus BPA im Schritt S3 bereitgestellt wurde, sondern es wird der genaue Weg angewendet, der durch den Schritt S4.1 bereitgestellt wurde. Der optionale Schritt S4.1 lässt sich auch im Verfahren der Figuren 2C und 2D anwenden.

Im Rahmen einer solchen Vorausschau werden nicht nur die Bewegung eines Armes 11 relativ zu dem/den Objekten O1 - O4, sondern auch die Bewegung des Armes 11 relativ zu dem Arm 12 und die Bewegung des Armes 12 relativ zu dem/den Objekten O1 - O4 betrachtet und auf mögliche Kollisionen überprüft.

Das Kontrollmodul S kann bei allen Ausführungsformen Teil des Systems 100 sein. Das Kontrollmodul S kann aber auch bei allen Ausführungsformen ein externes Element sein, das kommunikationstechnisch (z.B. über eine Schnittstelle 24) mit dem System 100 verbunden ist.

Vorzugsweise umfasst das Kontrollmodul S bei allen Ausführungsformen pro Arm 11, 12 ein eigenes Modul oder einen Arm-Manager, der für jeden Arm individuell eine Wegfindung analog zum Verfahren 200 der Fig. 2A durchführt. Jedes dieser Module, respektive jeder dieser Arm-Manager umfasst ein Abbild der Firmware FW* des entsprechenden Armes oder einen entsprechenden Profilgenerator.

In den Figuren sind die Steuer- und Kontrollleitung nicht gezeigt oder nur angedeutet, da es sich lediglich um schematische Darstellungen handelt, die dazu dienen, die Erfindung zu beschreiben und zu zeigen. Es ist hinlänglich bekannt, wie eine Steuerung mit den einzelnen Komponenten und Armen eines Handhabungssystems 100 zu verbinden ist.

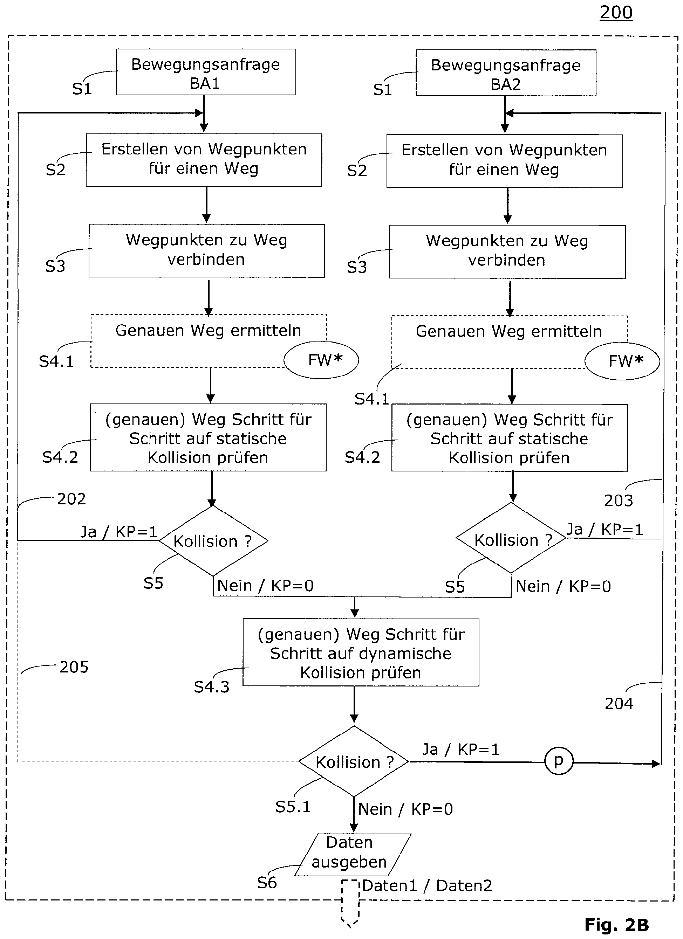

Die Planung der Bewegung/en in dem System 100 erfolgt mittels eines sogenannten Bewegungsplanungsalgorithmus BPA. Nach oder während der Planung einer Bewegung, die unter Einsatz des Bewegungsplanungsalgorithmus BPA erfolgt, kommt eine Kollisionsprüfung KP zum Einsatz. Wenn diese Kollisionsprüfung KP keine Kollision erwarten lässt, dann kann die so geplante Bewegung zur Ausführung an das System 100, respektive an die Motorsteuerung MS1, MS2 des entsprechenden Armes 11, 12 übergeben werden. Anderenfalls kann der Bewegungsplanungsalgorithmus BPA erneut angewendet werden, um einen Ausweichweg zu ermitteln. Dieser Ausweichweg wird dann der Kollisionsprüfung KP unterzogen. Diese Teilschritte können wiederholt werden, bis ein Ausweichweg gefunden wurde, der kollisionsfrei ist. Verfahren 200 nach diesem Prinzip sind beispielweise den Figuren 2A und 2B zu entnehmen. Ein beispielhaftes Verfahren 200, bei dem die Kollisionsprüfung KP nach dem Einsatz des Bewegungsplanungsalgorithmus BPA erfolgt, ist in den Figuren 2C und 2D gezeigt.

Eine bevorzugte Ausführungsform deckt auch den folgenden Ansatz mit ab. Falls sich einer von zwei Armen nicht bewegt und eine Kollision mit dem anderen Arm ergibt, der sich bewegen soll, so kann dem nicht bewegten Arm eine Ausweichbewegung vorgegeben werden. Falls sich beim geplanten Bewegen zweier Arme eine Kollision der Arme ergibt, so wird einem der Arme (z.B. dem Arm mit geringerer Priorität oder dem Arm, der seine Bewegungsanfrage später erhalten hat als der andere Arm) eine Zeitverzögerung vorgegeben. Wenn die Kollisionsprüfung KP dann immer noch eine Kollision der Arme anzeigt, so wird für einen der beiden Arme (z.B. für den Arm mit geringerer Priorität oder für den Arm, der seine Bewegungsanfrage später erhalten hat als der andere Arm) eine neue Route geplant. Falls einer der Arme gerade beschäftigt ist (z.B. einen Pipettiervorgang ausführt), so kann die Wegeplanung des anderen Armes pausiert werden, bis der andere Arm seine Beschäftigung (z.B. das Pipettieren) beendet und sich wegbewegt hat.

Das Prinzip dieses Verfahrens 200 ist in Fig. 2A anhand eines schematischen Flussdiagramms dargestellt. In einem ersten Schritt S1 wird dem System 100 oder dem Modul S eine erste Bewegungsanfrage BA1 übergeben, wie in Fig. 1 anhand eines Blockpfeiles BA1 verdeutlicht. Durch den Bewegungsplanungsalgorithmus BPA werden im Schritt S2 Wegpunkte vorgegeben und im Schritt S3 werden diese Wegpunkte zu einem (einfachen) Weg verbunden.

Das Verfahren 200 der Erfindung umfasst im Falle der Fig. 2A eine Schleife 201 (von S5 zu S2), die typischerweise mehrfach durchlaufen wird, bis ein geeigneter Weg gefunden wurde. Daher wird bei den meisten Ausführungsformen beim ersten Durchlaufen des Schrittes S2 (Schritt c. im Anspruch 1) der kürzeste Weg W1 oder ein anderer Vorgabeweg als Weg festgelegt. Somit wird als erstes jeweils geprüft, ob der Vorgabeweg (z.B. der kürzeste Weg W1) geeignet ist. Beim nächsten Durchlaufen der Schleife 201 werden dann andere Wegpunkte und somit ein anderer Weg (Ausweichbewegungen W2, W3, W4 genannt) vorgegeben und untersucht.

Bei allen Ausführungsformen der Erfindung kann auch statt des kürzesten Weges W1 ein anderer Weg (z.B. durch die Steuerung S) zu Beginn des Verfahrens 200 vorgegeben werden. Ein solcher Weg wird hier als Vorgabeweg bezeichnet.

Nun kommt bei jedem Durchlaufen der Schleife 201 die Kollisionsprüfung KP zum Einsatz, um den Weg der Schritte S2, S3 und eventuell S4.1 Schritt für Schritt auf Kollisionen zu überprüfen. Dieser Schritt ist in Fig. 2A als Schritt S4 bezeichnet. Falls die Kollisionsprüfung KP im Schritt S4 eine Kollision ermittelt hat (Schritt S5 in Fig. 2A), so verzweigt das Verfahren 200 nach Fig. 2A zurück zum Anfang, um andere Wegpunkte vorzugeben. Mit diesen anderen Wegpunkten werden die Schritte S2, S3, eventuell S4.1, S4 und S5 wiederholt, bis die Schleife 201 im Schritt S5 mit einem "Nein" abschliesst. Falls keine Kollision ermittelt wurde, so bedeutet das, dass der gefundene Weg geeignet ist. Dieser Weg wird z.B. in Form eines Datensatzes ausgegeben (Schritt S6 in Fig. 2A).

Anhand der Fig. 2B wird nun ein weiteres Verfahren 200 der Erfindung beschrieben. Vom Prinzip her sind die Verfahren 200 der Figuren 2A und 2B ähnlich. Das Verfahren 200 der Fig. 2B kann als eine Weiterentwicklung oder Modifikation des Verfahrens 200 der Fig. 2A betrachtet werden.

In Fig. 2B ist eine Situation gezeigt, bei der zwei Bewegungsanfragen BA1 und BA2 vorliegen (jeweils als Schritte S1 bezeichnet). Die Bewegungsanfrage BA1 gilt einem ersten Arm 11 und die Bewegungsanfrage BA2 gilt einem zweiten Arm 12. Wie bereits erwähnt, kann jedem Arm 11, 12 ein eigenes Modul oder einen eigener Arm-Manager zugeordnet sein. Daher sind in dem Flussdiagramm der Fig. 2B zwei parallele Verfahrenszweige gezeigt. Im gezeigten Beispiel sind diese parallelen Verfahrenszweige nahezu identisch. Sie unterscheiden sich nur durch das Abbild FW* der Firmware, da jeder Arm eine andere Firmware FW aufweisen kann (jedoch nicht muss) oder sie unterscheiden sich nur durch den Profilgenerator, der jedem Arm zugeordnet sein kann (jedoch nicht muss).

Die parallelen Verfahrenszweige können bei allen Ausführungsformen identisch sein, müssen aber nicht identisch sein.

Wie bereits beschrieben, wird einem ersten Schritt S1 dem System 100 oder dem Modul S eine erste Bewegungsanfrage BA1 bzw. eine zweite Bewegungsanfrage BA2 übergeben. Durch den Bewegungsplanungsalgorithmus BPA werden im Schritt S2 Wegpunkte für den ersten Arm 11 vorgegeben und im Schritt S3 werden diese Wegpunkte zu einem Weg für den ersten Arm 11 verbunden. Analog wird auch für den zweiten Arm 12 ein Weg ermittelt.

Vorzugsweise wird bei allen Ausführungsformen die Wegfindung für den zweiten Arm 12 solange verzögert, bis für den ersten Arm 11 ein geeigneter kollisionsfreier Weg gefunden wurde. Der Weg, der für den ersten Arm 11 gefunden wurde, wird dann bei der Wegfindung für den zweiten Arm 12 als fix angenommen.

Falls die optionalen Schritte S4.1 im Rahmen des Verfahrens 200 der Fig. 2B zur Anwendung kommen, so wird bei der Kollisionsprüfung im Schritt S4 für den ersten Arm 11 und im Schritt S4 für den zweiten Arm 12 nicht der einfache Weg angewendet, der durch den Algorithmus BPA im Schritt S3 bereitgestellt wurde, sondern es wird für jeden Arm 11, 12 der genaue Weg angewendet, der durch die jeweiligen Schritte S4.1 bereitgestellt wurde. Zum Ermitteln der genauen Wege kann jeweils ein Abbild FW* der Firmware des jeweiligen Armes 11, 12 oder der Profilgenerator dieser Arme 11, 12 zum Einsatz kommen.

Anders als in Fig. 2A, wird nun bei dem Verfahren 200 der Fig. 2B für jeden einzelnen Arm 11, 12 unabhängig voneinander eine erste Kollisionsprüfung KP.1 durchgeführt (Schritte S4.2 und S5 in Fig. 2B). Diese ersten Kollisionsprüfungen KP.1 werden hier auch als statische Kollisionsprüfungen bezeichnet, da Sie den sich bewegenden Arm (z.B. den Arm 11) in Bezug setzen zu quasi-statischen Objekten O1 - O4. Das Wort quasi-statisch bezieht sich hier darauf, dass sich die Objekte O1 - O4 im Betrachtungszeitraum nicht bewegen, die Arme 11, 12 hingegen schon. Falls bei einem oder beiden Armen 11, 12 eine Kollision vorhergesagt wird, so verzweigt das Verfahren 200 zurück zum jeweiligen Schritt S2. Wenn also z.B. der für den Arm 11 geplante (genaue) Weg zu einer Kollision mit einem der Objekte O1 - O4 führen würde, so wird die Wegfindung für diesen Arm 11 nochmals von neuem durchgeführt. Die Schleife 202 dient diesem Zweck. Im Falle des zweiten Armes 12 sorgt die zweite Schleife 203 für eine Wiederholung der Schritte S2, S3, S4.1, S4, S5, bis keine Kollision mehr auftritt.

Erst wenn beide Arme 11, 12 ohne Kollision sind, werden bei diesem speziellen Ausführungsbeispiel die Arme 11, 12 relativ zueinander betrachtet. Diese zweite Kollisionsprüfung KP.2 wird hier auch als dynamische Kollisionsprüfung bezeichnet, da sie die sich bewegenden Arm (z.B. die Arme 11, 12) relativ zueinander räumlich und zeitlich in Bezug setzt. Diese zweite Kollisionsprüfung KP.2 ist in Fig. 2B durch den Schritt S4.3 dargestellt. Auch in diesem Schritt S4.3 können bei allen Ausführungsformen die Wege betrachtet werden, die im Schritt S3 ermittelt wurden, oder es können die genauen Wege der optionalen Schritte S4.2 betrachtet werden.

Falls in dem Schritt S5.1 eine Kollision der beiden Arme 11, 12 ermittelt wurde, kann das Verfahren 200 zum Anfang zurück verzweigen.

Bei allen Ausführungsformen kann dieses zurück Verzweigen durch eine Art Prioritätsschalter gesteuert/beeinflusst sein. In Fig. 2B ist ein solcher Schalter (z.B. in Form eines Flags realisiert) durch ein kreisförmiges Symbol p rechts neben dem Schritt S5.1 gezeigt. Ein Arm (z.B. der Arm 11) kann eine höhere Priorität haben als ein anderer Arm (z.B. der Arm 12). In diesem Fall kann bei allen Ausführungsformen vorgesehen sein, dass die Wegfindung desjenigen Armes nicht unterbrochen wird, der die höhere Priorität hat, sondern dass die Wegfindung des jeweils anderen Armes erneut vorgenommen wird, um einen anderen geeigneten Weg zu finden. Ein solcher Schalter wird jedoch vorzugsweise bei allen Ausführungsformen so eingesetzt, dass nicht die Wegfindung unterbrochen wird, sondern dass vom System sichergestellt wird, dass derjenige Arm, der eine höhere Priorität hat, dem/den anderem/anderen Arm/en nicht ausweicht.

In Fig. 2B ist als Beispiel dem ersten Arm 11 die höhere Priorität zugeordnet. Daher verzweigt das Verfahren 200, ausgehend von dem Schritt S5.1, zurück zum Schritt S2 des zweiten Armes 12 (rechte Spalte im Flussdiagramm der Fig. 2B). Rückverzweigung ist mit dem Bezugszeichen 204 versehen. Die andere Rückverzweigung 205 ist daher im gezeigten Moment gestrichelt dargestellt.

Falls im Schritt S5.1 keine Kollision ermittelt wurde, so bedeutet das, dass die gefundenen Wege für beide Arme 11, 12 geeignet sind. Diese Wege werden in Form eines Datensatzes ausgegeben (Schritt S6 in Fig. 2B). Die Daten (in Fig. 1 als Daten1 und Daten2 bezeichnet) können bei allen Ausführungsformen im Schritt S6 auch separat für jeden Arm 11, 12 ausgegeben und an die jeweilige Motorsteuerung MS1 oder MS2 übergeben werden.

Die Bezeichnung "Datensatz" ist nicht einschränkend zu verstehen. Es handelt sich um die Ausgabe von Daten, Grössen oder Signalen, die dazu geeignet sind den entsprechenden Arm 11 oder 12 entlang des Weges zu führen, der im Verfahren 200 gefunden und als kollisionsfrei eingestuft wurde. Der Datensatz ist vorzugsweise bei allen Ausführungsformen unmittelbar kompatibel mit der jeweilige Motorsteuerung MS1, MS2.

In den Figuren 2C und 2D ist ein weiteres Verfahren 200 der Erfindung gezeigt, wobei Fig. 2C ein Teilverfahren 200.1 und Fig. 2D ein Teilverfahren 200.2 zeigt. Vorzugsweise werden diese Teilverfahren 200.1 und 200.2 zeitlich hintereinander ausgeführt.

Nachdem eine Bewegungsanfrage BA1 für einen Arm 11 eingegangen ist, wird unter Einsatz eines Bewegungsplanungsalgorithmus BPA ein erster Weg W1 ermittelt (Schritt S2.1 in Fig. 2C). Dieser Weg W1 wird in einer Tabelle oder Liste (siehe Bezugszeichen 210 in den Figuren 2C und 2D) abgelegt bzw. gespeichert (Schritt S2.2 in Fig. 2C). Dann wird beispielweise ein interner Zähler N um 1 erhöht (Schritt S2.3 in Fig. 2C). Solange N < M wird eine Schleife durchlaufen. Falls N < M (Schritt S2.4 in Fig. 2C), verzweigt der Pfad 206 zurück zu S2.1. Sobald N = M, ergibt die Prüfung im Schritt S2.4 ein Nein und das Verfahren 200.1 endet am Punkt V1. N ist eine ganze Zahl, die in 1er Inkrementen erhöht wird. M ist eine ganze Zahl, die hier zum Einsatz kommt, um die Anzahl der Durchläufe der Schleife des Verfahrens 200.1 festzulegen. M kann entweder fest vorgegeben sein, oder M kann durch den Anwender definiert werden. Umso grösser M ist, umso mehr mögliche Wege werden ermittelt und in der Tabelle oder Liste 210 abgelegt.

Die Tabelle oder Liste 210 kann bei allen Ausführungsformen z.B. in Form eines (Schiebe-)Registers in einem Speicher realisiert sein. Bei einer Anwendung gemäss den Figuren 2C und 2D arbeitet ein solches (Schiebe-) Register nach dem First-In First-Out Prinzip, d.h. der zuerst gespeicherte Weg wird auch als erster der Kollisionsprüfung im Schritt S3.2 der Fig. 2D unterzogen.

Nachdem nun M mögliche Wege in der Tabelle oder Liste 210 abgelegt wurden, kann das Teilverfahren 200.2 folgen. Diese Teilverfahren 200.2 startet ab dem Punkt V2. Als erstes wird der erste Weg aus der Tabelle oder Liste 210 bereitgestellt (Schritt S3.1 in Fig. 2D). Dieser erste Weg wird dann Schritt für Schritt auf Kollision überprüft (Schritt S3.2 in Fig. 2D).

Diese Kollisionsprüfung (Schritt S3.2 in Fig. 2D) kann separat eine statische und eine dynamische Kollisionsprüfung umfassen, oder sie kann in ein und derselben Kollisionsprüfung (kombinierte Kollisionsprüfung genannt) sowohl die quasi-statischen Objekte O1 - 04 als auch die dynamischen Objekte (z.B. den zweiten Arm 12) berücksichtigen.

Eine kombinierte Kollisionsprüfung kann z.B. auch im Schritt S4 der Fig. 2A zur Anwendung kommen.

Die Schritte S3.1, S3.2 und S5 werden wiederholt, bis die Schleife 207 im Schritt S5 mit einem "Nein" abschliesst. Falls keine Kollision ermittelt wurde, so bedeutet das, dass der gefundene Weg geeignet ist. Dieser Weg wird z.B. in Form eines Datensatzes ausgegeben (Schritt S6 in Fig. 2D).

Vorzugsweise laufen alle Kollisionsprüfungen der Erfindung nach dem folgenden Prinzip ab. Es wird der Weg in Punkte zerlegt, die jeweils einen Schritt weit auseinander liegen. Dann erfolgt rein rechnerisch für jeden dieser Punkt eine Kollisionsbetrachtung /-berechnung. Bei dieser Kollisionsbetrachtung /-berechnung wird ermittelt, ob sich zwei Objekte (z.B. der Arm 11 und das Objekt O1) berühren oder durchdringen. Falls sie sich berühren oder durchdringen, so liegt eine Kollision vor und der entsprechende Weg wird verworfen (von der Betrachtung ausgenommen). Falls keine Berührung oder Durchdringung ermittelt wurde, so wird der Arm 11 um einen Schritt weiter zum nächsten Punkt bewegt, um dann dort die Kollisionsbetrachtung /-berechnung zu wiederholen.

Diese Kollisionsprüfungen der Erfindung werden vorzugsweise bei allen Ausführungsformen mit den Einhüllenden EH1 usw. vorgenommen, um den Rechenaufwand zu reduzieren. Dabei reicht es für die meisten Ausführungsformen aus, wenn jede Einhüllenden EH1 usw. durch deren Kanten und Flächen beschrieben wird. Wenn z.B. eine Kante der Einhüllenden EH1 des Armes 11 in eine Seitenfläche des Objekts O1 eindringt, dann liegt eine Kollision vor.

Vorzugsweise kommt gemäss Erfindung bei allen Ausführungsformen als Bewegungsplanungsalgorithmus BPA ein heuristischer Ansatz zur Anwendung, da sich dieser als schneller und weniger rechenintensiv erwiesen hat.

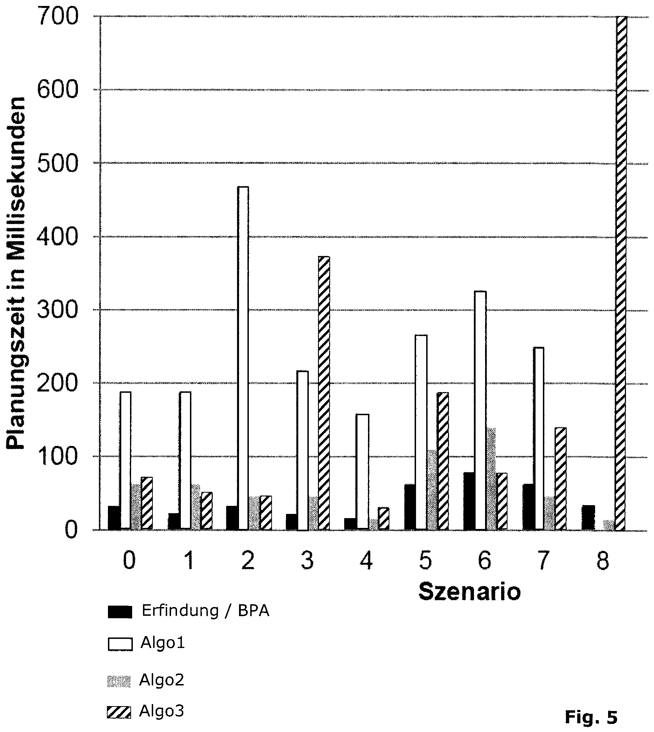

Die Auswahl eines heuristischen Ansatzes als Bewegungsplanungsalgorithmus BPA basiert auf zahlreichen Untersuchungen und Simulationen. In Fig. 5 ist in einer grafischen Darstellung ein Vergleich von vier verschiedenen Algorithmen gezeigt. Es wurden insgesamt 9 verschiedene Szenarien durch Simulationen dieser verschiedenen Bewegungsplanungsalgorithmen untersucht. Für jeden dieser Bewegungsplanungsalgorithmen, die hier mit den Bezeichnungen Erfindung (=BPA), Algo1, Algo2 und Algo3 versehen sind, wurde die Planungszeit in Millisekunden ermittelt und in dem Graph der Fig. 5 dargestellt. Der heuristische Ansatz BPA der Erfindung ist durch schwarze Balken dargestellt. Bei dem Algorithmus 1 (Algo1), der durch weisse Balken dargestellt ist, handelt es sich um einen Potential-Algorithmus. Bei einem Potential-Algorithmus kommt ein Potentialfeld bei der Wegfindung zum Einsatz. Der Ansatz des Potentialfelds ist, dass vom Ziel (hier zum Beispiel der Ort B) aus eine Anziehungskraft ausgeht, die den Arm 11 zu sich zieht. Hindernisse (z.B. 02) haben eine abstoßende Kraft. Diese Potentialfelder können mit Magnetfeldern verglichen werden, die den Arm 11 anziehen oder abstoßen. Stellt man die Kräfte in einer Matrix dar, so erhält man ein Netz, das das Minimum am Zielpunkt B hat.

Bei dem Algorithmus 2 (Algo2), der durch graue Balken dargestellt ist, handelt es sich um einen RRTConnect-Algorithmus und bei dem Algorithmus 3 (Algo3), der durch schraffierte Balken dargestellt ist, handelt es sich um einen PRM-Algorithmus. Bei dem Szenario 8 ist für Algo1 keine Zeit zu sehen, da für dieses Szenario kein Weg gefunden werden konnte.

Ein RRTConnect-Algorithmus setzt zwei Bäume ein, die gleichzeitig von Start A und Ziel B erstellt werden. Es wird dann versucht, diese beiden Bäume zu verbinden, um einen Weg zu finden. RRT steht für Rapidly-exploring Random Trees. Ein PRM-Algorithmus hingegen erstellt eine sogenannte Roadmap mit Punkten, die den gesamten Bewegungsbereich abdecken. Diese Punkte und deren Verbindung sind kollisionsfrei. PRM steht für Probabilistic Roadmap Method.

Der Graph der Fig. 5 zeigt sehr deutlich die Vorzüge des heuristischen BPA-Ansatzes der Erfindung gegenüber alternativen Lösungen. Vor allem die Kontrolle ob zwei Arme 11, 12 beim Ausweichen kollidieren, dauert bei den Algorithmen Algo2 und Algo3 deutlich länger als beim Algorithmus BPA der Erfindung.

Untersuchungen zur Weglänge, die mit den Algorithmen Erfindung (=BPA), Algo1, Algo2 und Algo3 durchgeführt wurden, bestätigen die positiven Eigenschaften des heuristischen Ansatzes im Zusammenhang mit einem (Flüssigkeits-)Handhabungssystem 100 der Erfindung.

Es hat sich auch gezeigt, dass der heuristische Ansatz den Vorteil der Nachvollziehbarkeit hat, was im Laborumfeld und bei wiederholten Analysen von kritischen Proben wichtig ist. Die Wege, die gefunden werden, können vorhergesagt werden, da die Art wie die Wege gemäss Erfindung erstellt werden immer gleich ist. Erst eine solche Validierung ermöglicht es, mit den Systemen 100 beispielsweise DNS-Analysen durchzuführen.

Gemäss diesem heuristischen Ansatz werden Regeln oder Strategien zum Ermitteln der Wegpunkte (z.B. für den Schritt S2 in Fig. 2A) vorgegeben. Diese Regeln oder Strategien werden nach einer fest vorgegebenen oder nach einer konfigurierbaren Reihenfolge abgearbeitet. Vorzugsweise werden bei allen Ausführungsformen für jeden Arm-Typ unterschiedliche Regeln oder Strategien vorgegeben oder diese Regeln werden für jeden Arm-Typ zu einem anderen Regelsatz miteinander verknüpft.

Vorzugsweise sind die Regeln oder Strategien bei allen Ausführungsformen in Form eines Regelsatzes miteinander verknüpft, wobei diese Verknüpfungen konditional sein können. Ein einfaches Beispiel mit einem Regelsatz mit Verknüpfungen wird weiter hinten in der Beschreibung gezeigt.

Bei einem Portal- oder Brückensystem, das im Rahmen der Erfindung vorzugsweise zum Einsatz kommt, kann man z.B. die folgende heuristisch ermittelte Regel (hier Regel1 genannt) vorgeben:
- Es wird die Höhe (Max_Höhe in z-Richtung) des höchsten aller Objekte O1 - 04 im Arbeitsbereich 10 ermittelt;
- Dann wird die Höhendifferenz zwischen dem momentanen Startpunkt A des Armes 11 und der Max_Höhe ermittelt;
- Diese Höhendifferenz wird nun als ein Wegpunkt bei der Bewegungsplanung (z.B. in Schritt S2) vorgegeben.

Die Regel1 dient zum schnellen und sicheren Ermitteln einer relativen Ausweichhöhe ΔH, die dazu geeignet ist einen Arm 11, 12 kollisionsfrei oberhalb eines Objekts O1 - O4 im Arbeitsbereich 10 entlang zu führen.

Im Folgenden sind weitere beispielhafte Regeln angegeben, die heuristisch ermittelt wurden. Bei den hier beschriebenen Regeln und Strategien handelt es sich um Beispiele, die beliebig miteinander kombiniert und/oder angepasst werden können. Es können auch zusätzliche Regeln und Strategien hinzugefügt werden. Vorzugsweise werden diese Regeln und Strategien miteinander zu einem Regelsatz verknüpft, wie bereits erwähnt.

Regel2: Beim Ermitteln von möglichen Wegpunkten werden sogenannte gesperrte Bereiche ausgesondert. In Fig. 1 ist als Beispiel auf der linken Seite des Arbeitsbereichs 10 ein gesperrter Bereich 14 gezeigt. In dem System 100 kann dort z.B. ein Flüssigkeitstank 15 oder dergleichen stehen. Da sich dieser Flüssigkeitstank 15 in den meisten Fällen an der gezeigten Stelle im gesperrten Bereich 14 befindet, wurde der gesperrte Bereich 14 von der Wegplanung des Bewegungsplanungsalgorithmus BPA ausgeschlossen.

Regel3: Der Bewegungsplanungsalgorithmus BPA der Erfindung arbeitet vorzugsweise mit allen Freiheitsgraden eines jeden Armes 11, 12. D.h. der Bewegungsplanungsalgorithmus BPA berücksichtigt vorzugsweise alle technisch möglichen Bewegungen der Arme 11, 12. Um hier jedoch eine schnellere Wegplanung und -findung zu ermöglichen, kann als eine weitere Regel (Regel3 genannt), die heuristisch ermittelt wurde, vorgegeben werden, dass z.B. Bewegungen in z-Richtung und x-Richtung gegenüber den Bewegungen in der x-y-Ebene bevorzugt werden sollen. Aus der Regel3 ergibt sich, wenn diese im BPA zum Einsatz kommt, dass der BPA stets versucht bei der Wegeplanung zuerst Hub- oder Absenkbewegungen parallel zur z-Achse und translatorische Bewegungen parallel zur x-Achse einzusetzen, um einen Ausweichweg zu finden.

Regel4: Der Bewegungsplanungsalgorithmus BPA der Erfindung arbeitet vorzugsweise bei allen Ausführungsformen mit der Regel4, die vorgibt, dass z-Bewegungen nicht als reine Hubbewegungen parallel zur z-Achse sondern als schräge Bewegungen auszuführen sind. Diese Regel4 wird hier vereinfachend als Trapez-Regel bezeichnet. Die Regel4 kann zusammen oder alternativ zur Regel3 eingesetzt werden. In den Figuren 3A und 3B ist die Regel4 anhand eines schematischen Beispiels verdeutlicht. In Fig. 3A ist ein System 100 der Erfindung von der Seite gezeigt. Die x-y-Ebene steht senkrecht zur Zeichenebene. Ein erster Arm 11, der sich z.B. entlang einer Brücke 17 in x-Richtung bewegen kann (es handelt sich hier um ein Portal- oder Brückensystem), umfasst z.B. einen Greifer 18, der im gezeigten Moment einen Flüssigkeitsbehälter 05 trägt. Um den Arm 11 im System 100 zu modellieren, wurde er durch einen umhüllenden Körper (hier ein 3-dimensionales Rechteck als Umhüllende EH1) definiert.

Die Trapez-Regel kann bei allen Ausführungsformen der Erfindung auch einen anderen Verlauf des Weges vorgeben. So kann z.B. eine reine Hubbewegung parallel zur Z-Achse übergehen in eine leicht schräge Bewegung bevor dann eine x- oder y-Bewegung anschliesst.

Es kommt nun vorzugsweise die oben beschriebene Regel1 zur Anwendung. Es wird die Höhe H1 (Max_Höhe in z-Richtung) des höchsten aller Objekte O1 im Arbeitsbereich 10 ermittelt. Dann wird die Höhendifferenz ΔH zwischen dem momentanen Startpunkt A auf der z-Achse des Armes 11 und der Höhe H1 ermittelt. Diese Höhendifferenz ΔH wird nun als ein Wegpunkt P1 bei der Bewegungsplanung (z.B. in Schritt S2 der Fig. 2A) vorgegeben. Falls die Umhüllende EH1 keinen Sicherheitsabstand enthält, kann beim Festlegen des Wegpunktes P1 ein kleines Δz als Sicherheitsabstand berücksichtigt werden.

Das Vorgeben eines Sicherheitsabstandes kann optional als eine weitere Regel5 im BPA definiert sein.

Dann kann die maximale Reisedistanz in x- und/oder y-Richtung ermittelt werden, um den Wegpunkt P2 zu finden. Ein senkrechtes Absenken des Armes 11 vom Wegpunkt P2 aus würde dann zum Zielort B führen. Bei dem in Fig. 3A gezeigten Beispiel würde die Kollisionsprüfung KP negativ verlaufen [KP=0], da beim Fahren des Armes 11 entlang des Weges W5 keine Kollision auftreten würde.

Die Regel4 könnte nun vorgeben, dass statt der reinen Hub- und Absenkbewegungen (parallel zur z-Achse, wie in Fig. 3A gezeigt) sogenannte Rampenbewegungen bevorzugt sind. In Fig. 3B ist, ausgehend von der gleichen Konstellation wie in Fig. 3A, eine Wegplanung mit Rampenbewegungen gezeigt. Beim Ermitteln des Wegpunktes P3 kann wiederum die Höhendifferenz ΔH (plus eventuell ein Sicherheitsabstand) berücksichtigt werden, indem die Regel1 eingesetzt wird. Zwischen dem Wegpunkt P3 und dem Wegpunkt P4, an dem ein rampenartiges Absenken beginnt, wird nicht die maximale Reisedistanz in x-und/oder y-Richtung zurück gelegt, sondern die Distanz zwischen P3 und P4 wird kürzer gewählt als die Distanz zwischen P1 und P2 in Fig. 3A. Durch ein schräges Absenken des Armes 11 von P4 bis zum Zielort B wird das gewünschte Ziel erreicht. Es ist ein Vorteil der Wegplanung nach Fig. 3B, dass der Weg W6 kürzer ist als der Weg W5.

Die Trapez-Regel (Regel4), oder Abwandlungen der Trapez-Regel, können bei allen Ausführungsformen zum Einsatz kommen, um Bewegungen in z-Richtung und/oder x-Richtung und/oder y-Richtung zu verkürzen. D.h. die Trapez-Regel/n wird/werden vorzugsweise in allen Dimensionen angewendet, die durch die Freiheitsgrade, respektive die Beweglichkeit des betroffenen Armes 11 möglich sind.

Als weitere heuristische Regel kann die sogenannte Regel6 der kleinstmöglichen Drehung bei allen Ausführungsformen eingesetzt werden. Diese Regel6 wird unter Bezugnahme auf die Figuren 4A, 4B und 4C erläutert, wobei auch diese Figuren rein schematischer Natur sind.

Ein Teil der Regeln (z.B. die Trapez-Regel (Regel4)) kann in der Firmware FW oder in dem Profilgenerator vorgegeben sein. In diesem Fall sind diese entsprechenden Regeln nicht Teil des Regelsatzes des BPA.

Fig. 4A zeigt, wie auch Fig. 1, eine Draufsicht des Arbeitsbereichs 10 eines Systems 100. Fig. 4B und Fig. 4C zeigen je eine Seitenansicht des Armes 11 der Fig. 4A in isolierter Darstellung. Der Arbeitsbereich 10 hat hier die Form eines Achtecks. Zentrales Element dieses Systems 100 kann ein achteckiger Teller sein, der sich um eine zentrale z-Achse R1 dreht, wie durch einen Doppelpfeil angedeutet. Seitlich und/oder oberhalb des Arbeitsbereiches 10 kann eine oder können mehrere Laufschienen/Brücken 17 angeordnet sein, um für die Arme 11, 12 als Führung zu dienen. Im gezeigten Beispiel sind Schienen 22 je auf einer Seite des Arbeitsbereiches 10 vorgesehen. Ein Portal 20 mit Horizontalbrücke 21 kann sich entlang der Schienen 22 parallel zur y-Achse bewegen. Ein Läufer 19 kann sich entlang der Horizontalbrücke 21 parallel zur x-Achse bewegen. Der Läufer 19 ist hier Teil eines erstens Armes 11, der einen Greifer 18 umfasst. Diese Art der Anordnung ist als ein weiteres Beispiel für mögliche Konstellationen von Handhabungssystemen 100 zu verstehen.

Die Umhüllende EH1 des Greifers 18 des Armes 11 ist in Fig. 4A (wie auch in den Figuren 3A, 3B) durch ein Rechteck modelliert worden. In Fig. 4A ist die Umhüllende EH1 in verschiedenen Drehstellungen gezeigt, um anzudeuten, dass die Eckpunkte der Umhüllenden EH1 beim Drehen um die z-Achse einen kreisförmigen Raum K1 überstreichen. Ein solcher Arm 11, der einen asymmetrischen Aufbau in Bezug zu seiner z-Drehachse hat, überstreicht beim Drehen um die z-Achse einen relativ grossen kreisförmigen Raum K1. Die Regel6 der kleinstmöglichen Drehung kann nun eine oder mehrere der folgenden Vorgaben/Teilregeln umfassen:
A. Regel6.1: Der Arm 11 kann zum Drehen um die z-Achse aus dem Arbeitsbereich 10 heraus oder mindestens an den Rand des Arbeitsbereiches 10 gefahren werden.
B. Regel6.2: Der Umfang des Armes 11 kann vor dem Drehen um die z-Achse reduziert werden, um den Radius des Kreises K1 zu reduzieren. Dieses Prinzip wird anhand einer Gegenüberstellung der beiden Figuren 4B und 4C deutlich. In Fig. 4C ist der Arm 11 mit einem hochgeklappten Greifer 18 gezeigt. Durch das Hochklappen des Greifers 18 ist der gesamte Arm 11 in der x-y-Ebene deutlich weniger ausladend. Es ergibt sich eine Umhüllende EH2, die mindestens in der x-y-Ebene eine deutlich kleinere Fläche hat und deren Drehkreis in der x-y-Ebene deutlich kleiner ist.
C. Regel6.3: Es können auch andere Drehbewegungen und/oder Kombinationen derselben als Regel6.3 vorgegeben werden, so kann ein Arm 11 oder 12 z.B. parallel zur z-Achse angehoben werden, um ihn dann erst in einer oberen Höhenposition (im freien Luftraum) zu drehen.

Es kann einige wenige Konstellationen geben, bei denen der Bewegungsplanungsalgorithmus BPA kein Ergebnis liefert. Um eine solche Situation auflösen zu können, kann bei allen Ausführungsformen z.B. die folgende heuristische Regel7 vorgegeben werden:
X1. Prüfen, ob ein anderer der vorhandenen Arme 11, 12 die gewünschte Bewegung/Handhabung, die durch eine erste Bewegungsanfrage BA1 vorgegeben wird, im System 100 ausführen kann. Dieses Prüfen nach X1 kann dann zu einem Ergebnis führen, wenn das System 100 mindestens zwei gleiche oder gleichartige Arme umfasst. Im Rahmen dieser Prüfung werden dann für diesen anderen Arm die Wegplanung und Kollisionsprüfung durchgeführt;
X2. Falls Schritt X1. nicht zu einer Auflösung der Situation führen sollte, kann z.B. eines der Objekte O1 - 04 im Arbeitsbereich 10 aufgenommen und an einem anderen Ort platziert werden. Bei dem Beispiel, das in Fig. 1 gezeigt ist, könnte sich aus diesem Grunde z.B. das Objekt 04 bereits in einer Ausweichzone 16 befinden. Nachdem eines oder mehrere der Objekte O1 - 04 umplatziert wurden, können erneut die Wegplanung und Kollisionsprüfung durchgeführt werden.
X3. In den meisten Fällen führen die Schritte X1. oder X2. zu einer Auflösung der Situation. Im Notfall kann ein Signal ausgegeben werden, um einen Nutzer des Systems 100 auf eine nicht-lösbare Situation aufmerksam zu machen.

Als weitere Regel8 für den heuristischen Ansatz kann bei allen Ausführungsformen eine Zeitgrenze vorgegeben werden. Durch die Begrenzung der Planungszeit auf z.B. zehn Sekunden, kann verhindert werden, dass die Wegfindung zu viel Zeit in Anspruch nimmt. Falls die Zeitgrenze erreicht wird, kann z.B. einer der Schritte X1., X2. oder X3. ausgeführt werden, um doch noch einen Weg zu finden. Bei der Ausführungsform nach Fig. 2C kann statt der Zahl M auch eine Zeitgrenze vorgegeben werden. Bei Erreichen der Zeitgrenze wird dann das Verfahren 200.1 beendet und es folgt das Verfahren 200.2.

Der heuristische Ansatz der Erfindung nutzt, soweit möglich und sinnvoll, das Wissen, das im System 100 vorhanden ist. Einerseits nutzt der heuristische Ansatz der Erfindung das Wissen über die momentane Topographie (die hier als Ist-Topographie bezeichnet wird) und andererseits nutzt es die Regeln (z.B. eine oder mehrere der Regeln1 bis Regel13). Dadurch wird verhindert, dass die Software bei der Bewegungsplanung quasi planlos zahlreiche Punkte im Raum betrachten und nach einer nicht erfolgreichen Kollisionsprüfung KP verwerfen muss.

Der heuristische Ansatz der Erfindung nutzt einfache Regeln (z.B. eine oder mehrere der Regeln1 bis Regel13), die im System 100 vorgegeben sind oder die vorgebbar sind, um möglichst schnell zu einer Lösung zu kommen.

Das System 100 zeichnet sich dadurch aus, dass sich die Topografie des Arbeitsbereiches 10 von Zeit zu Zeit ändern kann, da das eine Objekt (z.B. der mindestens eine Flüssigkeitsbehälter O1) an verschiedenen Orten auf dem Arbeitsbereich 10 abgesetzt werden kann. Daher wird vorzugsweise vor jeder Wegeplanung die Ist-Topographie ermittelt oder aus einem Speicher abgerufen. Die Ist-Topographie wird als quasi-statisch betrachtet, falls sich während der Zeitdauer einer Bewegung eines Armes 11, 12 keine oder nur unwesentliche Änderungen der Ist-Topographie ergeben.

Um ein problem- und reibungsloses Bewegen der beiden Arme 11, 12 zu ermöglichen, kommt ein Kontrollmodul S zum Einsatz, das die erforderlichen Schritte (z.B. die Schritte des Verfahrens 200) ausgeführt kann. Dieses Kontrollmodul S kann ein Teil des Systems 100 sein, oder es kann als separates Modul ausgeführt und mit dem System 100 kommunikationstechnisch (z.B. über eine Schnittstelle 24) verbunden sein, wie bereits erwähnt.

Das Kontrollmodul S ist vorzugsweise bei allen Ausführungsformen als Softwarelösung oder als eine Kombination von Hardware und Software implementiert, wie hinlänglich bekannt. Dem Kontrollmodul S kann z.B. ein (interner oder externer) Speicher 13 zugeordnet sein, wie in Fig. 1 angedeutet. Das Kontrollmodul S und/oder das System 100 kann/können eine Schnittstelle 23 umfassen, über die z.B. Regeln in Form von Daten oder Signalen übergeben werden können.

Bei allen Ausführungsformen können der BPA und die KP in dem Kontrollmodul S implementiert sein, wie in Fig. 1 angedeutet.

Das Kontrollmodul S ermittelt oder lädt (z.B. aus einem Speicher) in einem vorbereitenden Schritt die momentane quasi-statische Ist-Topografie des Arbeitsbereiches 10 samt des mindestens einen Objekts O1. Im Falle des Ausführungsbeispiels der Fig. 1 werden dabei nicht nur die Umhüllende des Objekts O1, sondern auch die Umhüllenden der anderen Objekte 02, 03, und 04 in der Ist-Topografie berücksichtigt.

Nun wird dem System 100 eine erste Bewegungsanfrage BA1 für einen ersten der beiden Arme 11 vorgegeben, wobei diese Bewegungsanfrage BA1 eine Bewegung von einem ersten Ort A zu einem zweiten Ort B in Auftrag gibt. Eine solche Bewegungsanfrage BA1 kann bei allen Ausführungsformen der Erfindung aus dem System 100 heraus erzeugt werden, oder sie kann z.B. von einer externen Steuerung oder Anwendungssoftware bereit gestellt werden.

Das System 100 und/oder das Kontrollmodul S ermittelt dann unter Einsatz des BPA den kürzesten Weg W1 von dem ersten Ort A zu dem zweiten Ort B. In Fig. 1 ist der kürzeste Weg W1 eine Gerade, die direkt vom Ort A zum Ort B führt. Alternativ kann statt des kürzesten Weges W1 auch in diesem ersten Schritt ein anderer Vorgabeweg (z.B. der Weg W5 in Fig. 3A) zur Anwendung kommen.

Nun wird durch das System 100 und/oder das Kontrollmodul S eine Kollisionsprüfung KP durchgeführt, um zu ermitteln, ob der erste der beiden Arme 11, falls er sich entlang des kürzesten Weges W1 oder entlang eines anderen Vorgabeweges bewegen würde, mit der Ist-Topografie des Arbeitsbereiches 10 kollidieren würde.

Fig. 1 lässt erkennen, dass eine direkte Bewegung des Armes 11 entlang des kürzesten Weges W1 zu einer Kollision mit dem Objekt 02 führen würde (in diesem Beispiel gehen wir davon aus, dass die dritte Dimension, die senkrecht zum Arbeitsbereich 10 steht, keinen Platz zum Ausweichen gibt). Die Kollisionsprüfung KP kann somit z.B. mit der Ausgabe der Ergebnisses KP=1 enden.

Da das Ergebnis für den Weg W1 KP=1 lautet, muss nicht auch noch ein Abgleich mit anderen sich bewegenden Armen (z.B. mit dem Arm 12) erfolgen. Falls die Kollisionsprüfung KP des Weges W1 das Ergebnis KP=0 ergeben würde, könnten in einem zweiten Schritt eine Kollisionsprüfung KP unter Berücksichtigung anderer sich bewegender Arme erfolgen. D.h. die Schritte S4.3, S5.1 und S6 z.B. des Verfahrens 200 nach Fig. 2B brauchen nicht ausgeführt zu werden.

Es kann bei einer Kollisionsprüfung KP unter Berücksichtigung anderer sich bewegender Arme in dem System 100 und/oder dem Kontrollmodul S eine dynamische Kollisionsprüfung KP durchgeführt werden, um zu ermitteln, ob der erste Arm 11 z.B. mit dem zweiten der beiden Arme 12 kollidieren würde. Im gezeigten Beispiel sitzt der zweite Arm 12 oberhalb ausserhalb des Arbeitsbereiches 10. Diese dynamische Kollisionsprüfung KP, falls sie überhaupt durchgeführt wird, würde daher KP=0 ausgeben.

Das System 100 und/oder das Kontrollmodul S führt nun entweder eine Vorgabebewegung W1 oder eine Ausweichbewegung W2, W3, W4 des ersten der beiden Arme 11 aus, um diesen von dem ersten Ort A zu dem zweiten Ort B zu bewegen. Die Entscheidung darüber, welchem der Wege die Bewegung folgt, wird in Abhängigkeit vom Ergebnis der Kollisionsprüfung KP getroffen. Da der kürzeste Weg W1 "verbaut° (KP=1) ist, muss eine Ausweichbewegung durch erneutes Ausführen der Schritte (In Fig. 2A werden z.B. die Schritte S2, S3, (S4.1), S4, S5 wiederholt; in Fig. 2D werden hingegen die Schritte S3.1, S3.2, S5 wiederholt) gefunden und dann ausgeführt werden.

In Fig. 1 sind beispielhaft drei mögliche Ausweichbewegungen W2, W3 und W4 gezeigt, die sich allesamt aus einer Aneinanderreihung von linearen Teilbewegungen zusammensetzen. Die Ausweichbewegung W2 umfasst eine kurze y-Bewegung, eine längere x-Bewegung und eine weitere kurze y-Bewegung. Die Ausweichbewegung W3 umfasst eine y-Bewegung und eine längere x-Bewegung. Die Ausweichbewegung W4 umfasst eine kurze negative y-Bewegung, eine längere x-Bewegung und eine weitere y-Bewegung. Die Ausweichbewegungen W2 und W3 würden zu Kollisionen mit den Objekten O2 oder O1 führen. Diese Ausweichbewegungen W2, W3 stehen daher auch nicht zur Verfügung (KP ist in beiden Fällen jeweils gleich "1"). Die Ausweichbewegung W4 hingegen ergibt keine Kollision (KP=0) und das System 100 und/oder das Kontrollmodul S kann den ersten Arm 11, respektive die Motorsteuerung MS1 des Armes 11, so ansteuern, dass dieser die Ausweichbewegung W4 ausführt.

Bei allen Ausführungsformen kann auch die dritte Dimension (hier in z-Richtung) berücksichtigt werden. Falls das System 100 genügend Arbeitsraum oberhalb des Arbeitsbereiches 10 aufweist, kann z.B. durch ein Anheben des Armes 11 ein Objekt 02 überwunden werden, ohne dass es zu einer Kollision kommen würde. In diesem Fall würde die entsprechende Ausweichbewegung einen Hubbewegung in z-Richtung und am Ende des Bewegungsablaufs eventuell auch eine Absenkbewegung in minus z-Richtung umfassen. Wenn z.B. Regel4 angewendet wird, macht der Arm 11 sogenannte Trapez-Bewegungen.

Bei allen Ausführungsformen kann ein Ansatz zum Einsatz kommen, bei dem in einem ersten Durchlauf die Wegplanung BPA und Kollisionsprüfung KP in einer ersten unteren Ebene durchgeführt wird. Dieser erste Durchlauf der Wegplanung BPA und Kollisionsprüfung KP ist quasi 2-dimensional und betrachtet hauptsächlich die Objekte O1 - 04 im Arbeitsbereich 10 und die Bewegung des Armes 11 in der x-y-Ebene um diese Objekte herum. Das initiale Ausführen von BPA und KP im 2-Dimensionalen kann z.B. als eine Regel9 vorgegeben sein.

In einem zweiten Durchlauf der Wegplanung BPA und Kollisionsprüfung KP kann dann der Arbeitsraum oberhalb des Arbeitsbereiches 10 betrachtet werden (Regel10 genannt). So kann z.B. bei einer Kombination der Regel10 mit der Regel9 relativ schnell ein Weg gefunden werden, falls der Arbeitsraum oberhalb des Arbeitsbereiches 10 frei ist.

Vorzugsweise kommt bei allen Ausführungsformen die Regel10 zum Einsatz, da diese Regel10 deutlich häufiger kollisionsfreie Wege liefert als die Regel9.

Bei allen Ausführungsformen kann auch die drei-dimensionale Form des zu bewegenden Armes 11 und/oder der Objekte O1 - O4 berücksichtigt werden. So kann z.B. ein Arm 11, der in eine Richtung besonders ausladend ist, durch eine Drehbewegung (z.B. unter Anwendung der Regel6) um die z-Achse so gedreht werden, das er problemlos an einem Objekt O1 - O4 vorbei bewegt werden kann.

Vorzugsweise wird bei allen Ausführungsformen jede direkte oder indirekte Bewegung eines Armes 11 oder 12 in kleine Inkremente zerteilt. An jedem der einzelnen Punkte, die sich bei der Wegplanung BPA so entlang eines Weges ergeben, wird eine Kollisionsbetrachtung KP durchgeführt. Im virtuellen wird somit quasi der Arm 11 und/oder 12 Schritt für Schritt über den Arbeitsbereich 10 und durch den Arbeitsraum oberhalb des Arbeitsbereiches 10 bewegt und es wird Inkrement für Inkrement eine Kollisionsprüfung KP durchgeführt, um Berührungen oder Durchdringungen zu finden.

Falls sich keines der Objekte O1 - O4 in dem Zeitfenster bewegt, das für das Zurücklegen des direkten oder indirekten Weges W1 - W4 benötigt wird, und falls auch kein anderer Arm (z.B. der Arm 12) während dieses Zeitfensters eine Bewegung ausführen wird, so kann eine einfache quasi-statische Kollisionsprüfung KP (z.B. in einem Schritt S4.2 der Fig. 2B) anhand der Ist-Topographie durchgeführt werden.

Falls sich jedoch während dieses Zeitfensters zusätzliche Bewegungen im System 100 ergeben, so wird neben den rein räumlichen Koordinaten auch die zeitliche Komponente in die Kollisionsprüfung KP mit einbezogen. Es wird zu diesem Zweck z.B. zusätzlich eine dynamische Kollisionsprüfung KP; siehe z.B. Schritt S4.3 der Fig. 2B durchgeführt. Eine Ausweichbewegung, die ermittelt wird, hat dann auch eine zeitliche Komponente.

Bei allen Ausführungsformen kann das System 100 und/oder das Kontrollmodul S in einem einfachen Fall von einer gleichmässigen Bewegung entlang eines Weges ausgehen. D.h. man geht in diesem Fall von einer Bewegung mit gleichmässiger Geschwindigkeit aus und es werden weder die Beschleunigungs- noch die Abbremsphasen berücksichtigt. Ein Weg, der bei der Kollisionsprüfung KP rechnerisch geprüft werden soll, wird jeweils in kleine Zeitinkremente zerlegt. Punkt für Punkt wird z.B. der Arm 11 entlang eines solchen Weges bewegt und es wird an jedem Punkt und zu jedem Zeitpunkt ermittelt, ob eine Kollision droht. Das Ausgehen von einer Bewegung mit gleichmässiger Geschwindigkeit eignet sich besonders für die quasi-statische Kollisionsprüfung KP, da hier keine Eigenbewegungen eines der Objekte O1 - O4 zu erwarten sind.

Vorzugsweise wird jedoch bei allen Ausführungsformen ein Bewegungsprofil (z.B. durch eine Firmware oder einen Profilgenerator vorgegeben) berücksichtigt, das eine Beschleunigungsphase, eine konstante Bewegungsphase und eine Abbremsphase umfasst. Vorzugsweise wird hier bei allen Ausführungsformen die Firmware FW oder der Profilgenerator eines jeden Antriebs berücksichtigt, wie weiter unten beschrieben wird.

Bei allen Ausführungsformen, die mit einer vorgebbaren Beschleunigung und/oder einer vorgebbaren Geschwindigkeit und/oder einer vorgebbaren negativen Beschleunigung (Abbremsen) arbeiten, können mindestens einem der Arme 11, 12 entsprechende Parameter zugeordnet werden. Diese Parameter finden dann beim Durchführen der Kollisionsprüfung KP Berücksichtigung, da sie eine Abhängigkeit der jeweiligen Position des Armes 11 im Raum vorgeben.

Bei allen Ausführungsformen kann das System 100 und/oder das Kontrollmodul S einen theoretisch geeigneten Weg während der Kollisionsprüfung KP entweder in äquidistante Abschnitte (Schrittweiten) unterteilen, oder es kann ein Weg in (gleichmässige) Zeitabschnitte unterteilt werden. Beim Vorgeben der Schrittweiten und/oder der Zeitabschnitte sollte die Grösse der Objekte O1 - O4 berücksichtigt werden, damit kein Objekt beim Prüfen auf mögliche Kollisionen "übersprungen" oder "übersehen" werden kann. Die Erfindung setzt auf eine diskrete (schrittweise) Kollisionsprüfung KP, um so die Rechenleistung, die zur Verfügung steht, optimal zu nutzen.

Die Schrittweite kann der jeweiligen Situation angepasst sein.

Falls die Kollisionsprüfung KP eine zu erwartende Kollision anzeigt (KP=1), wird ein Ausweichweg vorgegeben (z.B. Schritte S2 und S3 in Fig. 2A) und die Kollisionsprüfung KP (Schritte S4, S5 in Fig. 2A) wird anhand des Ausgleichsweges erneut durchgeführt, bis endgültig ein Weg im Orts- und Zeitregime gefunden wurde, der kollisionsfrei ist, bis also im Schritt S5 der Fig. 2A oder im Schritt S5.1 der Fig. 2B das Ergebnis KP=0 lautet.

Falls die Kollisionsprüfung KP eine zu erwartende Kollision anzeigt (KP=1), kann bei allen Ausführungsformen auch das "Parken" eines der Arme 11, 12 in einer Ausweichposition vorgegeben werden (Regel11). Einer der Arme 11, 12 wird virtuell auf diese Ausweichposition gesetzt und es werden dann die Wegfindung und die Kollisionsprüfung KP oder nur die Kollisionsprüfung KP erneut durchgeführt.

Falls ein Arm, der temporär auf einer Ausweichposition "geparkt" wurde, eine Funktion auszuführen hat, so muss dann in einem nachgelagerten Schritt ein neuer Weg für diesen Arm berechnet werden, wobei diese Berechnung dann von der Ausweichposition als Startpunkt ausgeht. Auch für diesen Arm wird dann das Verfahren 200 analog angewendet.

Falls in einem System 100, bei dem sich neben einem ersten Arm 11 auch ein zweiter Arm 12 (und/oder ein Objekt O1 - O4) bewegt, eine Kollision bei der dynamischen oder der kombinierten Kollisionsprüfung KP eines Weges ergeben sollte, so wird als erste Gegenmassnahme auf rechnerischem Wege simuliert, ob die Kollision vermieden werden kann, indem eine zeitlich gestaffelte Bewegung des ersten Armes 11 relativ zu dem zweiten Arm 12 (und/oder ein Objekt O1 - 04) durchgeführt wird. Diese erste Gegenmassnahme kann als Regel12 definiert sein.

Eine zeitlich gestaffelte Bewegung kann erreicht werden, indem entweder
- der Arm 11 zeitlich verzögert losbewegt wird, und/oder
- der Arm 12 zeitlich verzögert losbewegt wird, und/oder
- einer der beiden Arme 11, 12 langsamer bewegt wird, und/oder
- einer der beiden Arme 11, 12 schneller bewegt wird.

Auch hierzu können jeweils entsprechende (Teil-)Regeln im System 100 vorgegeben sein.

Bei allen Ausführungsformen, die mit einer zeitlichen Staffelung im Falle einer zu erwartenden Kollision arbeiten (Regel12), wird vorzugsweise eine Priorisierung vorgenommen (Regel13). Durch das Anwenden einer Priorisierung kann z.B. ein Arm 11 gegenüber einem anderen Arm 12 bevorzugt werden. Falls der Arm 11 z.B. produktiv zum Einsatz kommt, um ein Serum in einem Flüssigkeitsbehälter O1 zu pipettieren, so kann die Bewegung des Armes 12 zeitlich verzögert werden, falls dieser eine niedrigere Priorität hat. Oder bei der Wegfindung für den Arm 12 wird der Weg des Armes 11 als fix angenommen.

Vorzugsweise kommt bei allen Ausführungsformen ein Bewegungsplanungsalgorithmus BPA zum Einsatz, der einen Regelsatz mit mehreren Regeln (z.B. die Regeln1 bis Regel13) umfasst, wobei es sich um heuristische Regeln handelt. Der Bewegungsplanungsalgorithmus BPA bzw. der Regelsatz der Erfindung stellt eine Ablaufverknüpfung zwischen einzelnen Regeln her. Eine solche Ablaufverknüpfung gibt dem System 100 Vorgaben, wie es in welchen Situationen zu entscheiden hat. Dazu kann der Bewegungsplanungsalgorithmus BPA z.B. eine Ablaufverknüpfung umfassen, die im Folgenden vereinfacht in Form einer Pseudo-Programmiersprache beschrieben ist.

Beispielhafte Implementierung des Bewegungsplanungsalgorithmus BPA nach dem Vorgeben einer Bewegungsanfrage (BA1) von A → B:
- Wegpunkte für den kürzesten Weg von A → B vorgeben
- Wegpunkte zu Weg verbinden
- (quasi-statisch und/oder dynamisch oder kombinierte) KP durchführen
   o Falls KP = 0, dann Daten für den ersten Weg ausgeben
   o Sonst Schleife 1 abarbeiten

### [Schleife 1]

- Anwenden einer Regel aus dem Regelsatz, um (andere) Wegpunkte zu finden
- Wegpunkte zu (anderem) Weg verbinden
- (quasi-statisch und/oder dynamisch oder kombinierte) KP durchführen
   o Falls KP = 0, dann Daten für den (anderen) Weg ausgeben
   o Sonst zurück zum Anfang der Schleife 1.

Es liegt auf der Hand, dass es verschiedene Möglichkeiten gibt einen Bewegungsplanungsalgorithmus BPA so zu implementieren, dass er in einem System 100 das automatisierte Wegeplanen und -finden ermöglicht.

Eine konditionale Verknüpfung der Regeln eines Bewegungsplanungsalgorithmus BPA kann z.B. auch wie folgt aussehen. Es sei angemerkt, dass das folgende Beispiel lediglich das Grundprinzip einer Verknüpfung darstellen soll.
- Anwenden der Regel1
- Falls das Ergebnis KP=1, dann Anwenden der Regel2
- Sonst, Anwenden der Regel3.

Nach dem Durchführen einer Kollisionsprüfung KP wird vorzugsweise bei allen Ausführungsformen ein Datensatz ausgegeben, der zum Ansteuern/Bewegen des/der Arme 11, 12 eingesetzt werden kann. Ein solcher Datensatz kann bei allen Ausführungsformen z.B. eine vektorielle Beschreibung der einzelnen Bewegungen umfassen, oder jeder Weg kann als eine Menge einzelner Koordinaten-Tripel beschrieben werden, oder jeder Weg kann durch die Achspositionen beschrieben werden. Zu jedem Weg können optional, wie beschrieben, auch Parameter vorgegeben werden, die Angaben zu den Beschleunigungen, der Geschwindigkeit und optional auch zur Priorisierung machen. Diese Bewegungscharakteristika können aber auch durch Firmware FW oder den Profilgenerator der einzelnen Motorsteuerungen MS1, MS2 definiert sein.

Die entsprechende/n Bewegung/en werden dann im System 100 ausgeführt.

Falls während dem Ausführen der entsprechende/n Bewegung/en im System 100 eine weitere Bewegungsanfrage BA2 eingeht, so wird in einem ersten Schritt versucht beim Durchführen der Kollisionsprüfung KP für diese weitere Bewegungsanfrage BA2 einen Weg zu finden, der mit den momentan ablaufenden Bewegungen nicht kollidiert. D.h. es wird versucht einen Weg für die weitere Bewegung zu finden, der kollisionsfrei durch die sich bereits bewegenden Elemente (Arme und/oder Objekte) hindurch führt. Dabei werden die bereits laufenden Bewegungen vorzugsweise nicht unterbrochen und nicht umgeleitet, d.h. die erste Bewegungsanfrage BA1 wird abgearbeitet (fix im Sinne von unabänderbar angenommen).

Vorzugsweise werden bei allen Ausführungsformen (statische, quasi-statische) Objekte O1 - O4 und (dynamische) Arme 11, 12 mathematisch durch eine Einhüllende EH1, EH2 im System 100 und/oder Kontrollmodul S modelliert oder definiert. Vorzugsweise sind diese Objekte O1 - O4 und Arme 11, 12, respektive deren mathematisches Modell, in einer Bibliothek abgelegt (z.B. im Speicher 13).

Vorzugsweise werden bei allen Ausführungsformen die mathematischen Modelle der einzelnen Objekte O1 - O4 und Arme 11, 12 an den Grundachsen des Systems 100 ausgerichtet, um so den Speicherplatzbedarf und Rechenaufwand gering zu halten.

Vorzugsweise ist bei allen Ausführungsformen in der Bibliothek für jedes der Objekte ein Mindestabstand vorgegeben.

Gemäss Erfindung wird die Anwendung des Bewegungsalgorithmus BPA und die Kollisionsprüfung KP aufgerufen und ausgeführt, sobald eine Bewegungsanforderung BA1, BA2 für einen der Arme 11, 12 ans System 100 übergeben oder in dem System 100 erzeugt wurde.

Vorzugsweise ist die Erfindung bei allen Ausführungsformen wie folgt implementiert:
- Kollisionsfreie Wegfindung (Wegplanung nach BPA gefolgt von einer Kollisionsprüfung KP) für Bewegung(en) der Arme 11, 12: Für eine Bewegung eines Armes 11 soll ein Weg gefunden werden, der nicht zu Kollisionen mit dem Arbeitsbereich 10, den Objekten O1 - O4, die im Arbeitsbereich 10 platziert wurden, oder anderen Armen 12 führt.
- Simultanes Ausweichen eines nichtbeteiligten Armes 12: Ein Arm 12, der sich im Weg eines möglichen Weges eines Armes 11 befindet und der zurzeit keine Aktion durchführt, soll gleichzeitig mit der eigentlichen Bewegung eine Ausweichbewegung durchführen und somit den Weg freigeben (z.B. durch Anwenden der Regel11).
- Unterbrechungsfreies Abarbeiten kritischer Aktionen: Es sollte eine Möglichkeit geben, sicherzustellen, dass Arme, die soeben eine Aktion, wie z.B. Pipettieren, durchführen, nicht bewegt werden um z.B. einer anderen Bewegung im System 100 auszuweichen.
- Gleichzeitige kollisionsfreie Bewegung von mehreren Armen 11, 12: Mehrere Arme 11, 12 sollen sich, sofern sie sich nicht gegenseitig behindern, unabhängig voneinander bewegen können. Hierfür müssen gleichzeitig Wege erstellt werden, die nicht zu Kollisionen zwischen den sich bewegenden Armen 11, 12 führen. Entsprechende Wegplanungen und Kollisionsprüfungen können parallel (siehe z.B. Fig. 2B) oder in einander abwechselnden Schritten ausgeführt werden.
- Schnelle Berechnung eines Weges: Die eigentliche (produktive) Bewegung eines Armes 11 von der einen Seite zur anderen Seite des Systems 100 dauert typischerweise nur wenige Sekunden. Das Wegeplanen BPA und die Kollisionsprüfung KP eines Weges darf nur eine kurze Zeit (vorzugsweise wenige Sekunden) in Anspruch nehmen, um die Produktivität des Systems 100 nicht zu reduzieren.
- Finden des schnellsten Weges: Jede unnötige Bewegung reduziert den Probendurchsatz, respektive die Produktivität des Systems 100. Da die Systeme 100 oft für einen hohen Durchsatz ausgelegt sind, müssen möglichst die schnellsten Wege gefunden werden.
- Reproduzierbarkeit der Wege: Wenn mehrfach hintereinander derselbe StartPunkt A und End-Punkt B geplant werden soll, muss bei jeder Wegeplanung BPA und Kollisionsprüfung KP derselbe Weg entstehen. Dies ist notwendig, um sicherzustellen, dass das System 100 korrekt arbeitet. Vor allem im labortechnischen Bereich ist dies wichtig, da hier die Systeme 100 validiert werden müssen, was eine Vorhersehbarkeit der entstehenden Wege erfordert.

In den Ansprüchen sind die Verfahrensschritte des Verfahrens 200 teilweise in Form einer Liste mit Buchstaben versehen. Die Reihenfolge der einzelnen Schritte, die sich daraus ergeben, ist nicht zwingend vorgegeben. Die Schritte können teilweise auch in einer anderen Reihenfolge und teilweise auch zeitlich überlappend ausgeführt werden.

**Bezugszeichen :**

| | |
|---|---|
| Arbeitsbereich | 10 |
| erster (Handhabungs-)Arm | 11 |
| zweiter (Handhabungs-)Arm | 12 |
| Speicher | 13 |
| Gesperrter Bereich | 14 |
| Flüssigkeitstank | 15 |
| Ausweichzone | 16 |
| Laufschiene/Brücke | 17 |
| Greifer | 18 |
| Läufer | 19 |
| Portal | 20 |
| Horizontalbrücke | 21 |
| Schienen | 22 |
| Schnittstellen | 23, 24 |
| Leitung(en) | 25 |
| | |
| Flüssigkeitshandhabungssystem | 100 |
| | |
| Verfahren | 200 |
| Teilschritte des Verfahrens | 200.1, 200.2 |
| Schleifen | 201, 202, 203 |
| Rückverzweigungen | 204, 205, 206, 207 |
| Tabelle | 210 |
| | |
| Erster Ort | A |
| Algorithmen | BPA, Algo1, Algo2, Algo3 |
| Zweiter Ort | B |
| erste Bewegungsanfrage | BA1 |
| zweite Bewegungsanfrage | BA2 |
| Bewegungsplanungsalgorithmus | BPA |
| Daten / Ausgabegrössen | Daten1, Daten2 |
| Einhüllende | EH1, EH2 |
| Firmware | FW |
| Abbild der Firmware | FW* |
| Höhe | H1 |
| Höhendifferenz / relative Ausweichhöhe | ΔH |
| Kreis | K1 |
| Kollisionsprüfung | KP |
| Kollisionsprüfungen | KP.1, KP.2 |
| Motorsteuerung | MS1, MS2 |
| Objekte (z.B. Flüssigkeitsbehälter) | O1, O2 O3, O4, O5 |
| Prioritätsschalter | p |
| Wegpunkte | P1, P2 ... |
| zentrale z-Achse | R1 |
| Kontrollmodul | S |
| Schritte | S1, S2, S3, S4, etc. |
| Schritte | S2.1, S2.2, S2.3, S2.4 |
| Schritte | S4.1, S4.2, S4.3 |
| Schritt | S5.1 |
| (Verfahrens-)Punkt | V1; V2 |
| Erster Weg | W1 |
| zweiter Weg | W2 |
| dritter Weg | W3 |
| vierter Weg | W4 |
| fünfter Weg | W5 |
| sechster Weg | W6 |
| Koordinaten | x, y, z |
| Schritte | X1, X2, X3 |

## Patentansprüche

1. Verfahren (200) zur Kollisionsvermeidung in einem automatisierten Handhabungssystem (100), das umfasst:
- einen Arbeitsbereich (10), der zum quasi-statischen Aufnehmen mindestens eines Objekts (O1) ausgelegt ist,
- mindestens zwei numerisch kontrollierte Arme (11, 12), die über den Arbeitsbereich (10) bewegbar sind,
wobei die folgenden Schritte ausgeführt werden:
a. Vorgeben der Ist-Topografie des Arbeitsbereiches (10) samt der gegenwärtigen Position des mindestens einen Objekts (O1),
b. Vorgeben (S3.1; S2, S3, S4.1) eines Weges von einem ersten Ort (A) zu einem zweiten Ort (B), wobei beim ersten Durchlaufen dieses Schrittes b. ein Vorgabeweg, vorzugsweise der kürzestes Weg (W1), als Weg vorgegeben wird,
c. Durchführen in einer Vorausschau auf rechnerischem Wege mittels Simulation einer quasi-statischen Kollisionsprüfung (S4, S5; S4.2) für den vorgegebenen Weg (W1), um zu ermitteln, ob der erste der beiden Arme (11), falls er sich entlang dieses Weges (W1) bewegen würde, mit der Ist-Topografie des Arbeitsbereiches (10) kollidieren würde,
d. Wiederholen der Schritte b., c. und d., solange im Schritt c. eine Kollision ermittelt wird, ansonsten Ausführen des nachfolgenden Schrittes e.,
e. Durchführen in einer Vorausschau auf rechnerischem Wege mittels Simulation einer dynamischen Kollisionsprüfung (S4, S5; S4.3, S5.1) für den Weg (W1), um zu ermitteln, ob die Arme (11, 12), falls der erste der beiden Arme (11) sich entlang dieses Weges (W1) bewegen würde, miteinander kollidieren würden,
f. Anwenden einer Ausweichstrategie, falls im Schritt e. eine Kollision ermittelt wurde, und Ausführen einer Bewegung des ersten der beiden Arme (11) von dem ersten Ort (A) zu dem zweiten Ort (B) unter Anwendung der Ausweichstrategie,
g. Ausführen einer Bewegung des ersten der beiden Arme (11) von dem ersten Ort (A) zu dem zweiten Ort (B) entlang des Weges (W1) falls die dynamische Kollisionsprüfung im Schritt e. keine Kollision ergeben hat, **dadurch gekennzeichnet, dass** beim Anwenden der Ausweichstrategie gemäss Schritt f. eine Möglichkeit darin besteht, die Schritte b. bis f. so oft zu wiederholen bis keine Kollision mehr detektiert wird, wobei im Schritt b. jedes Mal ein neuer Ausweichweg (W2, W3, W4) vom ersten Ort (A) zum zweiten Ort (B) vorgegeben wird.

2. Verfahren nach Anspruch 1, **dadurch gekennzeichnet, dass** bei jedem Durchlaufen des Schrittes b. jeweils ein anderer möglicher Weg von dem ersten Ort (A) zu dem zweiten Ort (B) ermittelt (S2, S3; S4.1) und vorgegeben wird, wobei das Ermitteln weiterer möglicher Wege anhand eines Regelsatzes erfolgt.

3. Verfahren nach Anspruch 2, **dadurch gekennzeichnet, dass** im Schritt b.
andere mögliche Wege, die von dem ersten Ort (A) zu dem zweiten Ort (B) führen, aus einer Tabelle oder Liste (210) entnommen werden (S3.1).

4. Verfahren nach Anspruch 3, **dadurch gekennzeichnet, dass** in einem vorbereitenden Schritt (S2.2) mehrere mögliche Wege anhand des Regelsatzes ermittelt und in der Tabelle oder Liste (210) gespeichert werden.

5. Verfahren nach Anspruch 1, 2 oder 3, **dadurch gekennzeichnet, dass**
i) die Bewegung des ersten der beiden Arme (11) von dem ersten Ort (A) zu dem zweiten Ort (B) entlang des Vorgabeweges erfolgt, falls sich beim ersten Durchlaufen des Schrittes c. keine Kollision ergeben hat,
ii) die Bewegung des ersten der beiden Arme (11) von dem ersten Ort (A) zu dem zweiten Ort (B) entlang des Ausweichweges (W2, W3, W4) erfolgt, der unter Anwendung der Ausweichstrategie ermittelt wurde, falls sich beim Durchlaufen des Schrittes e. eine Kollision ergeben hat.

6. Verfahren nach Anspruch 5, **dadurch gekennzeichnet, dass**
- im Schritt ii) zusätzlich zu der Bewegung des ersten der beiden Arme (11) entlang des Ausweichweges (W2, W3, W4) auch der zweite der beiden Arme (12) entlang eines Ausweichweges bewegt wird, oder
- dass im Schritt ii) der erste der beiden Arme (11) entlang des Vorgabeweges bewegt wird und der zweite der beiden Arme (12) entlang eines Ausweichweges bewegt wird, oder
- dass im Schritt ii) eine zeitlich gestaffelte Bewegung des ersten der beiden Arme (11) relativ zu dem zweiten der beiden Arme (12) durchgeführt wird.

7. Verfahren nach Anspruch 1, 2 oder 3, **dadurch gekennzeichnet, dass** die beiden Arme (11, 12) simultan über den Arbeitsbereich (10) bewegbar sind.

8. Verfahren nach Anspruch 1, 2 oder 3, **dadurch gekennzeichnet, dass** beim Vorgeben der Ist-Topografie das mindestens eine Objekt (O1) sowie andere statische und quasi-statische Objekte mathematisch durch eine Umhüllende (EH1, EH2) im Handhabungssystem (100) und/oder Kontrollmodul (S) modelliert oder definiert sind.

9. Verfahren nach Anspruch 1, **dadurch gekennzeichnet, dass** beim Anwenden der Ausweichstrategie im Schritt f. ein Regelsatz zur Anwendung kommt.

10. Verfahren nach Anspruch 2, 4 oder 9, **dadurch gekennzeichnet, dass** der Regelsatz eine oder mehrere heuristische Regeln umfasst.

11. Verfahren nach Anspruch 2, 4 oder 9, **dadurch gekennzeichnet, dass** der Regelsatz eine oder mehrere der folgenden Regeln umfasst:
- Ermitteln einer relativen Ausweichhöhe (ΔH), die dazu geeignet ist kollisionsfrei einen der Arme (11, 12) oberhalb eines der Objekte (O1) entlang zu bewegen (Regel1);
- Ausschliessen eines gesperrten Bereichs (14) (Regel2);
- Berücksichtigen aller technisch möglichen Bewegungen der Arme (11, 12) im Handhabungssystem (100) (Regel3);
- Vermeiden von reinen Hubbewegungen und/oder reinen Absenkbewegungen beim Ausführen einer Ausweichbewegung (W2, W3, W4) (Regel4);
- Vorgeben eines Sicherheitsabstandes vor dem Ausführen einer Ausweichbewegung (W2, W3, W4) (Regel5);
- Vorgeben einer kleinstmöglichen Drehung, falls einer der Arme (11, 12) eine Drehbewegung ausführen soll (Regel6);
- Prüfen, ob ein anderer als der in der ersten Bewegungsanforderung (BA1) angefragte erste Arm (11) eine anstehende Handhabung oder Bewegung durchführen kann (Regel7 X1);
- Prüfen, ob das Objekt (O1) im Arbeitsbereich (10) aufgenommen und an einem anderen Ort platziert werden kann (Regel7 X2);
- Ausgeben eines Signals, um einen Nutzer des Handhabungssystems (100) auf eine nicht-lösbare Situation aufmerksam zu machen (Regel7 X3);
- Vorgeben einer Zeitgrenze und Anwenden einer anderen Regel (Regel8);
- initiales Ermitteln (S2, S3; S4.1) eines Weges im 2-Dimensionalen (Regel9);
- Ausführen des Ermittelns (S2, S3; S4.1) eines Weges in einem Arbeitsraum oberhalb des Arbeitsbereiches (10) (Regel10);
- Parken eines der Arme (11, 12) in einer Ausweichposition (Regel11);
- Prüfen, ob eine zeitlich gestaffelte Bewegung des ersten Armes (11) relativ zu dem zweiten Arm (12) durchgeführt werden kann (Regel12);
- Anwenden einer Priorisierung, um einen der Arme (11) gegenüber einem anderen der Arme (12) zeitlich oder wegmässig zu bevorzugen (Regel13).

12. Verfahren nach Anspruch 1, 2 oder 3, **dadurch gekennzeichnet, dass** im Rahmen eines der Teilschritte das Abbild einer Firmware (FW*) eingesetzt wird, um einen exakteren Weg zu ermitteln und um die Kollisionsprüfung/en des/der Schritte c. und/oder e. anhand dieses exakteren Weges durchzuführen.

13. Verfahren nach Anspruch 12, **dadurch gekennzeichnet, dass** für jeden der beiden Arme (11, 12) ein Abbild einer anderen Firmware eingesetzt wird.

14. Verfahren nach Anspruch 1, 2 oder 3, **dadurch gekennzeichnet, dass** im Rahmen eines der Teilschritte ein Profilgenerator eingesetzt wird, um einen exakteren Weg zu ermitteln, wobei der Profilgenerator auch eingesetzt wird, um das Ausführen einer Bewegung des ersten der beiden Arme (11) von dem ersten Ort (A) zu dem zweiten Ort (B) zu steuern.

15. Automatisiertes Handhabungssystem (100), das umfasst:
- einen Arbeitsbereich (10),
- mindestens ein Objekt (O1), das im Arbeitsbereich (10) aufgenommen ist,
- einen ersten numerisch kontrollierten Arm (11),
- mindestens einen zweiten numerisch kontrollierten Arm (12), wobei diese Arme (11, 12) über den Arbeitsbereich (10) bewegbar sind,
- Mittel zur Kollisionsvermeidung (S, BPA, KP), die dergestalt implementiert sind, dass
o die gegenwärtige Ist-Topografie des Arbeitsbereiches (10) ermittelbar ist,
o ein Bewegungsplanungsalgorithmus (BPA) anwendbar ist, der einen Weg von einem ersten Ort (A) zu einem zweiten Ort (B) ermittelt, wobei beim ersten Anwenden des Bewegungsplanungsalgorithmus (BPA) ein Vorgabeweg, vorzugsweise der kürzeste Weg (W1), als Weg (W1) vorgegeben wird,
o eine quasi-statische Kollisionsprüfung (KP) für den Weg (W1) anwendbar ist, der vom Bewegungsplanungsalgorithmus (BPA) vorgegeben wurde,
o eine dynamische Kollisionsprüfung (KP) für den Weg (W1) anwendbar ist, der vom Bewegungsplanungsalgorithmus (BPA) vorgeschlagen wurde,
wobei die quasi-statische Kollisionsprüfung (KP) dazu ausgelegt ist zu ermitteln, ob beim Bewegen des ersten Armes (11) von dem ersten Ort (A) zu dem zweiten Ort (B) entlang des Weges (W1) eine Kollision verursacht würde, und wobei die dynamische Kollisionsprüfung (KP) dazu ausgelegt ist zu ermitteln, ob beim Bewegen des ersten Armes (11) und des zweiten Armes (12) eine Kollision verursacht würde, und wobei die quasi-statische und die dynamische Kollisionsprüfung (KP) in einer Vorausschau auf rechnerischem Wege mittels Simulation durchführbar ist, **dadurch gekennzeichnet, dass** der Bewegungsplanungsalgorithmus (BPA) ausgelegt ist, um jedes Mal einen neuen Ausweichweg (W2, W3, W4) vom ersten Ort (A) zum zweiten Ort (B) zu ermitteln, falls eine Kollision bei der quasi-statischen oder der dynamischen Kollisionsprüfung (KP) detektiert wird.

16. Automatisiertes Handhabungssystem (100) gemäss Anspruch 15, **dadurch gekennzeichnet, dass** jeweils ein möglicher Weg von dem ersten Ort (A) zu dem zweiten Ort (B) ermittelbar ist (S2, S3; S4.1) und dann die Kollisionsprüfungen (KP) dieses möglichen Weges erfolgt, wobei das Ermitteln möglicher Wege anhand eines Regelsatzes erfolgt.

17. Automatisiertes Handhabungssystem (100) gemäss Anspruch 15, **dadurch gekennzeichnet, dass** mehrere mögliche Wege von dem ersten Ort (A) zu dem zweiten Ort (B) aus einer Tabelle oder Liste (210) entnehmbar sind, um dann im Rahmen der Kollisionsprüfungen (KP) einen möglichen Weg nach dem anderen zu prüfen, bis ein kollisionsfreier Weg ermittelt wurde.

18. Automatisiertes Handhabungssystem (100) gemäss Anspruch 15, **dadurch gekennzeichnet, dass** dem Handhabungssystem (100) ein Regelsatz zur Verfügung steht, der beim Ermitteln der mehreren möglichen Wege einsetzbar ist.

19. Automatisiertes Handhabungssystem (100) gemäss Anspruch 15, **dadurch gekennzeichnet, dass** dem Handhabungssystem (100) eine oder mehrere heuristische Regeln zur Anwendung vorgebbar sind, wobei diese Regeln in einem Speicher (13) des Handhabungssystems (100) gespeichert oder über eine Schnittstelle (23) an das Handhabungssystem (100) übergebbar sind.

20. Automatisiertes Handhabungssystem (100) gemäss Anspruch 15, 16 oder 17, **dadurch gekennzeichnet, dass** der Bewegungsplanungsalgorithmus (BPA) und/oder die Kollisionsprüfung (KP) in einem Kontrollmodul (S) implementiert ist/sind, wobei das Kontrollmodul (S) einen Controller umfasst, der dazu ausgelegt ist den Bewegungsplanungsalgorithmus (BPA) anzuwenden und/oder die Kollisionsprüfungen (KP) durchzuführen.

21. Automatisiertes Handhabungssystem (100) gemäss Anspruch 15, 16 oder 17, **dadurch gekennzeichnet, dass** der erste Arm (11) systemseitig über eine Motorsteuerung (MS1) so ansteuerbar ist, dass er Bewegungen (W2, W3, W4) ausführt, um von dem ersten Ort (A) zu dem zweiten Ort (B) zu gelangen.

22. Automatisiertes Handhabungssystem (100) gemäss Anspruch 21, **dadurch gekennzeichnet, dass** die Motorsteuerung (MS1) eine Firmware (FW) umfasst, die Bewegungscharakteristika des ersten Armes (11) vorgibt.

23. Automatisiertes Handhabungssystem (100) gemäss Anspruch 22, **dadurch gekennzeichnet, dass** ein Abbild der Firmware (FW*) in dem Kontrollmodul (S) implementiert ist.

24. Automatisiertes Handhabungssystem (100) gemäss Anspruch 15, 16 oder 17, **dadurch gekennzeichnet, dass** es einen Profilgenerator umfasst, auf den der Bewegungsplanungsalgorithmus (BPA) zugreift oder der bei der/den Kollisionsprüfungen (KP) zu Einsatz kommt.

25. Automatisiertes Handhabungssystem (100) gemäss Anspruch 15, 16 oder 17, **dadurch gekennzeichnet, dass** es dazu ausgelegt ist eine relative Ausweichhöhe (ΔH) zu ermitteln, um dann den ersten Arm (11) kollisionsfrei oberhalb des Behälters (O1) entlang führen zu können.

26. Automatisiertes Handhabungssystem (100) gemäss Anspruch 15, 16 oder 17, **dadurch gekennzeichnet, dass** durch eine Software (BPA) und/oder ein Kontrollmodul (S) beim Ermitteln eines Weges
- ein gesperrter Bereich (14) vorgebbar ist, und/oder
- alle technisch möglichen Bewegungen der Arme (11, 12) berücksichtigbar sind, und/oder
- statt reinen Hubbewegungen und/oder reinen Absenkbewegungen trapezförmige Bewegungen vorgebbar sind.

## Claims

1. Process (200) for collision avoidance in an automated handling system (100), which comprises:
- a working area (10) which is configured for quasi-static receiving of at least one object (O1),
- at least two numerically controlled arms (11, 12) which are movable above the working area (10),
wherein the following steps are carried out:
a. Providing the actual topography of the working area (10) including the current position of the at least one object (O1);
b. Providing (S3.1; S2, S3, S4.1) a path from a first position (A) to a second position (B), wherein when this step b. is passed through for the first time, a reference path, preferably the shortest path (W1) is provided as path;
c. Executing a quasi-static collision examination (S4, S5; S4.2) for the provided path (W1) in a preview on a mathematical path by means of a simulation, for determining whether the first of the two arms (11) would collide with the actual topography of the working area (10) if moved along this path (W1);
d. Repeating the steps b., c. and d. as long as in step c. a collision is determined, otherwise executing the subsequent step e.;
e. Executing a dynamic collision examination (S4, S5; S4.3, S5.1) for the path (W1) in a preview on a mathematical path by means of a simulation, for determining whether the arms (11, 12) would collide with each other if the first of the two arms (11) would move along this path (W1);
f. Applying an evasion strategy if a collision was determined in step e., and executing a movement of the first of the two arms (11) from the first position (A) to a second position (B) by applying the evasion strategy;
g. Executing a movement of the first of the two arms (11) from the first position (A) to the second position (B) along the path (W1) if the dynamic collision examination in step e. has not determined a collision;
**characterized in that** when applying the evasion strategy according to step f. there is the possibility to repeat the steps b. to f. so often until no collision is detected anymore, wherein in step b. each time a new evasion path (W2, W3, W4) is provided from the first position (A) to the second position (B).

2. Process according to claim 1, wherein with each run through of step b. in each case another possible path from the first position (A) to the second position (B) is determined (S2, S3; S4.1) and provided, wherein the determination of further possible paths is based on a set of rules.

3. Process according to claim 2, wherein in step b. other possible paths which leads from the first position (A) to the second position (B) are taken (S3.1) from a table or list (210).

4. Process according to claim 3, wherein in a preparatory step (S2.2) multiple possible paths are determined by use of the set of rules and stored in the table or list (210).

5. Process according to claim 1, 2 or 3, wherein
i) the movement of the first of the two arms (11) from the first position (A) to the second position (B) is carried out along the reference path if no collision result during the first passing through of step c.,
ii) the movement of the first of the two arms (11) from the first position (A) to the second position (B) is carried out along the evasion path which has been determined by use of the evasion strategy, if a collision resulted during the passing through of step e..

6. Process according to claim 5, wherein
- in step ii) in addition to the movement of the first of the two arms (11) along the evasion path (W2, W3, W4), the second of the two arms (12) is moved along an evasion path as well, or
- in step ii) the first of the two arms (11) is moved along the reference path and the second of the two arms (12) is moved along an evasion path, or
- in step ii) a movement of the first of the two arms (11) is carried out staggered in time relative to the second of the two arms (12).

7. Process according to claim 1, 2 or 3, wherein both arms (11, 12) are movable simultaneously above the working area (10).

8. Process according to claim 1, 2, or 3, wherein when providing the actual topography, the at least one object (O1) as well as other static and quasi-static objects are modelled or defined mathematically by an envelope (EH1, EH2) in the handling system (100) and/or control module (S).

9. Process according to claim 1, wherein when applying the evasion strategy in step f. a set of rules is applied.

10. Process according to claim 2, 4 or 9, wherein the set of rules comprises one or more heuristic rules.

11. Process according to claim 2, 4 or 9, wherein the set of rules comprises one or more of the following rules:
- Determining a relative evasion height (ΔH) which is suitable for moving one of the arms (11, 12) above one of the objects (O1) without collision (Rule1);
- Excluding a blocked area (14) (Rule2);
- Considering all technically possible movements of the arms (11, 12) in the handling system (100) (Rule3);
- Avoiding of pure elevating movements and/or pure lowering movements when carrying out an evasion movement (W2, W3, W4) (Rule4);
- Providing a security distance prior to the execution of an evasion movement (W2, W3, W4) (Rule5);
- Providing a smallest possible rotation if one of the arms (11, 12) shall carry out a rotational movement (Rule6);
- Examining if another arm than the first arm addressed in the first movement request (BA1) can carry out the outstanding handling or movement (Rule7 X1);
- Examining whether the object (O1) in the working area (10) may be picked up and positioned at another position (Rule7 X2);
- Outputting a signal for advising a user of the handling system (100) of a situation which is not solvable (Rule7 X3);
- Providing a time limit and applying another Rule (Rule8);
- Initial determining (S2, S3; S4.1) a path in 2-dimensions (Rule9);
- Executing the determination (S2, S3; S4.1) of a path in a working space above the working area (10) (Rule10);
- Parking of one of the arms (11, 12) in an evasion position (Rule11);
- Examining whether a movement of the first arm (11) may be carried out staggered in time relative to the second arm (12) (Rule12);
- Applying a prioritization to favor one of the arms (11) over the other of the arms (12) with respect to time or path (Rule13).

12. Process according to claim 1, 2, or 3, wherein within the scope of one of the partial steps the image of a firmware (FW*) is used, to determine a more accurate path and to carry out the collision examination(s) of the step(s) c. and/or e. based on this more accurate path.

13. Process according to claim 12, wherein for each of the two arms (11, 12) an image of another firmware is used.

14. Process according to claim 1, 2, or 3, wherein in the scope of one of the partial steps a profile generator is used for determining a more accurate path, wherein the profile generator is also used for controlling the execution of a movement of the first of the two arms (11) from the first position (A) to the second position (B).

15. Automated handling system (100), which comprises:
- a working area (10),
- at least one object (O1) which is received in the working area (10),
- a first numerically controlled arm (11),
- at least one second numerically controlled arm (12), wherein these arms (11, 12) are movable above the working area (10),
- means for collision avoidance (S, BPA, KP), which are implemented in such a way that
• the current actual topography of the working area (10) is determinable,
• a movement planning algorithm (BPA) is applicable which determines a path from a first position (A) to a second position (B), wherein in the first application of the movement planning algorithm (BPA) a reference path, preferably the shortest path (W1) is provided as path (W1),
• a quasi-static collision examination (KP) for the path (W1), which has been provided by the movement planning algorithm (BPA), is applicable,
• a dynamic collision examination (KP) for the path (W1), which has been suggested by the movement planning algorithm (BPA), is applicable,
wherein the quasi-static collision examination (KP) is configured to determine whether when moving the first arm (11) from the first position (A) along the path (W1) to the second position (B) a collision would be provoked, and wherein the dynamic collision examination (KP) is configured to determine whether when moving the first arm (11) and the second arm (12) a collision would be provoked, and wherein the dynamic collision examination (KP) is designed to determine whether during the movement of the first arm (11) and the second arm (12) a collision would be caused, and wherein the quasi static and the dynamic collision examination (KP) is executable in a preview on a mathematical path by means of a simulation, **characterized in that** the movement planning algorithm (BPA) is designed to determine each time a new evasion path (W2, W3, W4) from the first position (A) to the second position (B), if a collision is detected during the quasi static or the dynamic collision examination (KP).

16. Automated handling system (100) according to claim 15, wherein in each case a possible path from the first position (A) to the second position (B) is determinable (S2, S3; S4.1) and then the collision examination (KP) of this possible path is carried out, wherein the determination of possible paths is based on a set of rules.

17. Automated handling system (100) according to claim 15, wherein multiple possible paths from the first position (A) to the second position (B) are retrievable from a table or list (210), for examining one path after the other as part of the collision examination (KP), until a collision-free path was determined.

18. Automated handling system (100) according to claim 15, wherein a set of rules is provided to the handling system (100) which is usable for determining the multiple possible paths.

19. Automated handling system (100) according to claim 15, wherein one or more heuristic rules are providable to the handling system (100) for use, wherein these rules are stored in a storage (13) of the handling system (100) or are transferable via an interface (23) to the handling system (100).

20. Automated handling system (100) according to claim 15, 16, or 17, wherein the movement planning algorithm (BPA) and/or the collision examination (KP) is/are implemented into a control module (S), wherein the control module (S) comprises a controller configured to apply the movement planning algorithm (BPA) and/or to carry out the collision examination (KP).

21. Automated handling system (100) according to claim 15, 16, or 17, wherein the first arm (11) is controllable by the system (100) by means of an engine control (MS1) in such a way that he carries out movements (W2, W3, W4) to reach the second position (B) when starting from the first position (A).

22. Automated handling system (100) according to claim 21, wherein the engine control (EC1) comprises a firmware (FW) which specifies the movement characteristics of the first arm (11).

23. Automated handling system (100) according to claim 22, wherein an image of the firmware (FW*) is implemented into the control module (S).

24. Automated handling system (100) according to claim 15, 16, or 17, wherein it comprises a profile generator which is accessible by the movement planning algorithm (BPA) or which is used in the collision examination(s) (KP).

25. Automated handling system (100) according to claim 15, 16, or 17, which is configured to determine a relative evasion height (ΔH), for guiding the first arm (11) collision-free above the container (O1).

26. Automated handling system (100) according to claim 15, 16, or 17, wherein by use of a software (BPA) and/or a control module (S) in the determination of a path
- a blocked area (14) is providable, and/or
- all technically possible movements of the arms (11, 12) are considerable, and/or
- instead of pure elevating movements and/or pure lowering movements trapezoidal movements are providable.

## Revendications

1. Procédé (200) pour éviter des collisions dans un système de manipulation automatisé (100), qui comprend :
- une zone de travail (10) conçue pour recevoir de façon quasi-statique au moins un objet (O1),
- au moins deux bras à commande numérique (11, 12) mobiles au-dessus de la zone de travail (10),
dans lequel on réalise les étapes suivantes consistant à :
a. fournier la topographie réelle de la zone de travail (10) ainsi que la position actuelle du au moins un objet (O1) ;
b. fournir (S3.1 ; S2, S3, S4.1) un trajet d'une première position (A) à une deuxième position (B), dans lequel, lorsque cette étape b. est transmis pour la première fois, un trajet de référence, de préférence le trajet le plus court (W1) est fourni comme trajet ;
c. exécuter un examen de collision quasi-statique (S4, S5 ; S4.2) pour le trajet fourni (W1) dans un aperçu sur un trajet mathématique au moyen d'une simulation, pour déterminer si le premier des deux bras (11) entrerait en collision avec la topographie actuelle de la zone de travail (10) si elle est déplacée le long de ce trajet (W1) ;
d. répéter les étapes b., c. et d. aussi longtemps que dans l'étape c. une collision est déterminée, sinon exécuter l'étape suivante e. ;
e. exécuter un examen de collision dynamique (S4, S5 ; S4.3, S5.1) pour le trajet (W1) dans un aperçu sur un trajet mathématique au moyen d'une simulation pour déterminer si les bras (11, 12) entreraient en collision l'un avec l'autre si le premier des deux bras (11) se déplace le long de ce trajet (W1) ;
f. appliquer une stratégie d'évasion si une collision était déterminée à l'étape e. et exécuter un mouvement du premier des deux bras (11) de la première position (A) à une deuxième position (B) en appliquant la stratégie d'évasion ;
g. exécuter un mouvement du premier des deux bras (11) de la première position (A) à la deuxième position (B) le long du trajet (W1) si l'examen de collision dynamique à l'étape e. n'a pas déterminé une collision ;
**caractérisé en ce que** lors de l'application de la stratégie d'évasion selon l'étape f. il est possible de répéter les étapes b. à f. tellement souvent jusqu'à ce qu'il n'y ait plus de collision, dans l'étape b. chaque fois qu'un nouveau trajet d'échappement (W2, W3, W4) est fourni de la première position (A) à la deuxième position (B).

2. Procédé selon la revendication 1, dans lequel dans chaque passage de l'étape b. dans chaque cas, un autre trajet possible de la première position (A) à la deuxième position (B) est déterminé (S2, S3 ; S4.1) et prévu, dans lequel la détermination de trajets possibles est basée sur un ensemble de règles.

3. Procédé selon la revendication 2, dans lequel dans l'étape b. d'autres trajets possibles qui mènent de la première position (A) à la deuxième position (B) sont pris (S3.1) d'un tableau ou d'une liste (210).

4. Procédé selon la revendication 3, dans lequel, dans une étape préparatoire (S2.2), plusieurs trajets possibles sont déterminés par l'utilisation de l'ensemble de règles et stockées dans le tableau ou la liste (210).

5. Procédé selon la revendication 1, 2 ou 3, dans lequel
i) le mouvement du premier des deux bras (11) de la première position (A) à la deuxième position (B) s'effectue le long du trajet de référence s'il n'y a pas de collision lors du premier passage de l'étape c.,
ii) le mouvement du premier des deux bras (11) de la première position (A) à la deuxième position (B) s'effectue le long du trajet d'évasion qui a été déterminé par l'utilisation de la stratégie d'évasion, si une collision a eu lieu lors du passage de l'étape e..

6. Procédé selon la revendication 5, dans lequel
- dans l'étape ii), en plus du mouvement du premier des deux bras (11) le long du trajet d'évasion (W2, W3, W4), le deuxième des deux bras (12) est également déplacé le long d'un trajet d'évasion, ou
- dans l'étape ii), le premier des deux bras (11) est déplacé le long du trajet de référence et le deuxième des deux bras (12) est déplacé le long d'un trajet d'évasion, ou
- dans l'étape ii), un mouvement du premier des deux bras (11) est décalé dans le temps par rapport au deuxième des deux bras (12).

7. Procédé selon la revendication 1, 2 ou 3, dans lequel les deux bras (11, 12) sont mobiles simultanément au-dessus de la zone de travail (10).

8. Procédé selon la revendication 1, 2 ou 3, dans lequel, lorsque la topographie réelle est fournie, l'au moins un objet (O1) ainsi que d'autres objets statiques et quasi statiques sont modélisés ou définis mathématiquement par une enveloppe (EH 1, EH2) dans le système de manipulation (100) et/ou le module de commande (S).

9. Procédé selon la revendication 1, dans lequel, lors de l'application de la stratégie d'évasion à l'étape f. un ensemble de règles est appliqué.

10. Procédé selon la revendication 2, 4 ou 9, dans lequel l'ensemble de règles comprend une ou plusieurs règles heuristiques.

11. Procédé selon la revendication 2, 4 ou 9, dans lequel l'ensemble de règles comprend une ou plusieurs des règles suivantes :
- déterminer une hauteur d'évasion relative (ΔH) qui convient pour déplacer l'un des bras (11, 12) au-dessus de l'un des objets (O1) sans collision (Règle 1) ;
- exclure une zone bloquée (14) (Règle 2) ;
- considérer tous les mouvements techniquement possibles des bras (11, 12) dans le système de manipulation (100) (Règle 3) ;
- éviter les mouvements élévateurs purs et/ou les mouvements d'abaissement purs lors d'un mouvement d'évasion (W2, W3, W4) (Règle 4) ;
- fournir une distance de sécurité avant l'exécution d'un mouvement d'évasion (W2, W3, W4) (Règle 5) ;
- fournir une rotation la plus petite possible si l'un des bras (11, 12) effectue un mouvement de rotation (règle 6) ;
- examiner si un autre bras que le premier bras adressé dans la première demande de mouvement (BA1) peut effectuer la manipulation ou le mouvement exceptionnel (Règle 7 X1) ;
- examiner si l'objet (O1) dans la zone de travail (10) peut être ramassé et positionné à une autre position (règle 7 X2) ;
- sortir un signal pour conseiller un utilisateur du système de manutention (100) d'une situation qui n'est pas soluble (Règle 7 X3) ;
- fournir un délai et appliquer une autre règle (règle 8) ;
- déterminer initialement (S2, S3 ; S4.1) un trajet en 2 dimensions (règle 9) ;
- exécuter la détermination (S2, S3 ; S4.1) d'un trajet dans un espace de travail au-dessus de la zone de travail (10) (Règle 10) ;
- stationner un des bras (11, 12) dans une position d'évasion (règle 11) ;
- examiner si un mouvement du premier bras (11) peut être effectué échelonné dans le temps par rapport au deuxième bras (12) (Règle 12) ;
- appliquer une priorité pour favoriser l'un des bras (11) sur l'autre des bras (12) par rapport au temps ou au trajet (Règle 13).

12. Procédé selon la revendication 1, 2 ou 3, dans lequel, dans le cadre de l'une des étapes partielles, l'image d'un firmware (FW*) est utilisée, pour déterminer un trajet plus précis et pour effectuer l'examen de collision de(s) l'étape(s) c. et/ou e. sur la base de ce trajet plus précis.

13. Procédé selon la revendication 12, dans lequel pour chacun des deux bras (11, 12), une image d'un autre microprogramme est utilisée.

14. Procédé selon la revendication 1, 2 ou 3, dans lequel, dans le cadre de l'une des étapes partielles, un générateur de profil est utilisé pour déterminer un trajet plus précis, dans lequel le générateur de profil est également utilisé pour commander l'exécution d'un mouvement du premier des deux bras (11) de la première position (A) à la deuxième position (B).

15. Système automatisé de manutention (100), qui comprend :
- une zone de travail (10),
- au moins un objet (O1) qui est reçu dans la zone de travail (10),
- un premier bras à commande numérique (11),
- au moins un deuxième bras commandé numériquement (12), dans lequel ces bras (11, 12) sont mobiles au-dessus de la zone de travail (10),
- moyens d'évitement des collisions (S, BPA, KP), qui sont mis en oeuvre de telle sorte que
• la topographie actuelle de la zone de travail (10) est déterminable,
• un algorithme de planification de mouvement (BPA) est applicable qui détermine un trajet d'une première position (A) à une deuxième position (B), dans lequel, dans la première application de l'algorithme de planification de mouvement (BPA), un trajet de référence, de préférence le trajet le plus court (W1) est fourni en tant que trajet (W1),
• un examen de collision quasi-statique (KP) pour le trajet (W1), qui a été fourni par l'algorithme de planification du mouvement (BPA), est applicable,
• un examen de collision dynamique (KP) pour le trajet (W1), qui a été suggéré par l'algorithme de planification du mouvement (BPA), est applicable,
dans lequel l'examen de collision quasi-statique (KP) est configuré pour déterminer si, lors du déplacement du premier bras (11) de la première position (A) le long du trajet (W1) à la deuxième position (B), une collision serait provoquée et dans lequel l'examen de collision dynamique (KP) est configuré pour déterminer si, lors du déplacement du premier bras (11) et du deuxième bras (12), une collision serait provoquée et dans lequel l'examen de collision dynamique (KP) est conçu pour déterminer si pendant le mouvement du premier bras (11) et du deuxième bras (12), une collision serait provoquée, et l'examen de collision quasi statique et dynamique (KP) est exécutable dans un aperçu sur un trajet mathématique au moyen d'une simulation, **caractérisé en ce que** l'algorithme de planification du mouvement (BPA) est conçu pour déterminer chaque fois qu'un nouveau trajet d'évasion (W2, W3, W4) passe de la première position (A) à la deuxième position (B), si une collision est détectée pendant l'examen de collision quasi-statique ou dynamique (KP).

16. Système de manipulation automatisé (100) selon la revendication 15, dans lequel, dans chaque cas, un trajet possible de la première position (A) à la deuxième position (B) est déterminable (S2, S3; S4.1) et ensuite l'examen de collision (KP) de ce trajet possible est effectué, dans lequel la détermination des trajets possibles est basée sur un ensemble de règles.

17. Système de manipulation automatisé (100) selon la revendication 15, dans lequel plusieurs trajets possibles de la première position (A) à la deuxième position (B) peuvent être récupérés d'un tableau ou d'une liste (210), pour examiner un trajet après l'autre dans le cadre de l'examen de collision (KP), jusqu'à ce qu'un trajet sans collision soit déterminé.

18. Système de manipulation automatisé (100) selon la revendication 15, dans lequel un ensemble de règles est fourni au système de manipulation (100) qui est utilisable pour déterminer les multiples trajets possibles.

19. Système de manipulation automatisé (100) selon la revendication 15, dans lequel une ou plusieurs règles heuristiques peuvent être utilisées pour le système de manipulation (100), ces règles étant stockées dans un stockage (13) du système de manipulation (100) ou sont transférables via une interface (23) au système de manipulation (100).

20. Système de manipulation automatisé (100) selon la revendication 15, 16 ou 17, dans lequel l'algorithme de planification de mouvement (BPA) et/ou l'examen de collision (KP) sont mis en oeuvre dans un module de commande (S), dans lequel le module de commande (S) comprend un contrôleur configuré pour appliquer l'algorithme de planification de mouvement (BPA) et/ou pour effectuer l'examen de collision (KP).

21. Système de manipulation automatisé (100) selon la revendication 15, 16 ou 17, dans lequel le premier bras (11) peut être commandé par le système (100) au moyen d'une commande de moteur (MS1) de telle sorte qu'il effectue des mouvements (W2, W3, W4) pour atteindre la deuxième position (B) à partir de la première position (A).

22. Système de manipulation automatisé (100) selon la revendication 21, dans lequel la commande de moteur (EC1) comprend un microprogramme (FW) qui spécifie les caractéristiques de mouvement du premier bras (11).

23. Système de manipulation automatisé (100) selon la revendication 22, dans lequel une image du firmware (FW*) est implémentée dans le module de commande (S).

24. Système de manipulation automatisé (100) selon la revendication 15, 16 ou 17, dans lequel il comprend un générateur de profil qui est accessible par l'algorithme de planification de mouvement (BPA) ou qui est utilisé dans le ou les examens de collision (KP).

25. Système de manipulation automatisé (100) selon la revendication 15, 16 ou 17, qui est configuré pour déterminer une hauteur d'évasion relative (ΔH), pour guider le premier bras (11) sans collision au-dessus du conteneur (O1).

26. Système de manipulation automatisé (100) selon la revendication 15, 16 ou 17, dans lequel, en utilisant un logiciel (BPA) et/ou un module de commande (S) dans la détermination d'un trajet
- une zone bloquée (14) peut être fournie, et/ou
- tous les mouvements techniquement possibles des bras (11, 12) sont considérables, et/ou
- au lieu de mouvements élévateurs purs et/ou de mouvements d'abaissement purs, les mouvements trapézoïdaux sont prévus.
